(19) Europäisches Patentamt / European Patent Office / Office européen des brevets

(11) **EP 4 346 121 A1**

(12) **EUROPEAN PATENT APPLICATION**

(43) Date of publication:
**03.04.2024 Bulletin 2024/14**

(21) Application number: **23200108.1**

(22) Date of filing: **27.09.2023**

(51) International Patent Classification (IPC):
*H04B 7/185* (2006.01)   *H04W 24/10* (2009.01)

(52) Cooperative Patent Classification (CPC):
**H04B 7/18513; H04W 24/10**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.09.2022 KR 20220123656**

(71) Applicant: **Samsung Electronics Co., Ltd.**
**Suwon-si, Gyeonggi-do 16677 (KR)**

(72) Inventors:
• **Jung, Sangyeob**
  **Suwon-si 16677 (KR)**
• **Agiwal, Anil**
  **Suwon-si 16677 (KR)**

(74) Representative: **Gulde & Partner**
**Patent- und Rechtsanwaltskanzlei mbB**
**Wallstraße 58/59**
**10179 Berlin (DE)**

(54) **METHOD AND APPARATUS FOR MEASUREMENT REPORTING OF UNCREWED AERIAL VEHICLE TERMINAL IN NON-TERRESTRIAL NETWORK**

(57)   The present disclosure relates to a 5G communication system or a 6G communication system for supporting higher data rates beyond a 4G communication system such as long term evolution (LTE). Methods and devices are provided in a wireless communication system. Configuration information on a measurement report is received from a base station. The configuration information includes first information on a first number of triggering cells. A first measurement report for at least one first cell fulfilling an entry condition is transmitted to the base station, in case that a second number of the at least one first cell is larger than or equal to the first number of triggering cells. A second measurement report for at least one second cell fulfilling a leaving condition is transmitted to the base station. The at least one second cell is in the first measurement report.

FIG.1E

EP 4 346 121 A1

**Description**

**CROSS-REFERENCE TO RELATED APPLICATION(S)**

This application is based on and claims priority under 35 U.S.C. § 119 to Korean Patent Application No. 10-2022-0123656, filed on September 28, 2022, in the Korean Intellectual Property Office, the disclosure of which is incorporated herein by reference in its entirety.

**BACKGROUND**

**1. Field**

The disclosure relates to the operation of a terminal and a base station in a wireless communication system and, more particularly, to a method and an apparatus for measurement reporting of an uncrewed aerial vehicle terminal in a non-terrestrial network.

**2. Description of Related Art**

Considering the development of wireless communication from generation to generation, the technologies have been developed mainly for services targeting humans, such as voice calls, multimedia services, and data services. Following the commercialization of 5G (5th generation) communication systems, it is expected that the number of connected devices will exponentially grow. Increasingly, these will be connected to communication networks. Examples of connected things may include vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6G (6th generation) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bit per second (bps) and a radio latency less than $100\mu$sec, and thus will be 50 times as fast as 5G communication systems and have the 1/10 radio latency thereof.

In order to accomplish such a high data rate and an ultra-low latency, it has been considered to implement 6G communication systems in a terahertz (THz) band (for example, 95 gigahertz (GHz) to 3THz bands). It is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, Radio Frequency (RF) elements, antennas, novel waveforms having a better coverage than Orthogonal Frequency Division Multiplexing (OFDM), beamforming and massive Multiple-input Multiple-Output (MIMO), Full Dimensional MIMO (FD-MIMO), array antennas, and multiantenna transmission technologies such as large-scale antennas. In addition, there has been ongoing discussion on new technologies for improving the coverage of terahertz-band signals, such as metamaterial-based lenses and antennas, Orbital Angular Momentum (OAM), and Reconfigurable Intelligent Surface (RIS).

Moreover, in order to improve the spectral efficiency and the overall network performances, the following technologies have been developed for 6G communication systems: a full-duplex technology for enabling an uplink transmission and a downlink transmission to simultaneously use the same frequency resource at the same time; a network technology for utilizing satellites, High-Altitude Platform Stations (HAPS), and the like in an integrated manner; an improved network structure for supporting mobile base stations and the like and enabling network operation optimization and automation and the like; a dynamic spectrum sharing technology via collision avoidance based on a prediction of spectrum usage; an use of Artificial Intelligence (AI) in wireless communication for improvement of overall network operation by utilizing AI from a designing phase for developing 6G and internalizing end-to-end AI support functions; and a next-generation distributed computing technology for overcoming the limit of LTE computing ability through reachable super-high-performance communication and computing resources (such as Mobile Edge Computing (MEC), clouds, and the like) over the network. In addition, through designing new protocols to be used in 6G communication systems, developing mechanisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of 6G communication systems in hyperconnectivity, including person to machine (P2M) as well as machine to machine (M2M), will allow the next hyper-connected experience. Particularly, it is expected that services such as truly immersive eXtended Reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

## SUMMARY

Disclosed embodiments are to provide an apparatus and a method for effectively performing measurement reporting by an uncrewed aerial vehicle in a wireless communication system.

According to an embodiment, a method performed by a user equipment (LTE) in a wireless communication system, the method comprising receiving, from a base station, configuration information on a measurement report including information on a number of triggering cells, transmitting, to the base station, a first measurement report for at least one first cell fulfilling an entry condition, in case that a number of the at least one first cell is larger than or equal to the number of triggering cells, and transmitting, to the base station, a second measurement report for at least one second cell fulfilling a leaving condition, wherein the at least one second cell fulfilling the leaving condition is a cell which was included in the first measurement report.

According to an embodiment, a method performed by a base station in a wireless communication system, the method comprising transmitting, to a user equipment (UE), configuration information on a measurement report including information on a number of triggering cells, receiving, from the UE, a first measurement report for at least one first cell fulfilling an entry condition, in case that a number of the at least one first cell is larger than or equal to the number of triggering cells, and receiving, from the LTE, a second measurement report for at least one second cell fulfilling a leaving condition, wherein at least one second cell fulfilling the leaving condition is a cell which was included in the first measurement report.

According to an embodiment, a LTE in a wireless communication system is provided. The LTE includes a transceiver, and at least one processor coupled with the transceiver. The at least one processor is configured to receive, from a base station, configuration information on a measurement report including information on a number of triggering cells, transmit, to the base station, a first measurement report for at least one first cell fulfilling an entry condition, in case that a number of the at least one first cell is larger than or equal to the number of triggering cells, transmit, to the base station, a second measurement report for at least one second cell fulfilling a leaving condition, wherein the at least one second cell fulfilling the leaving condition is a cell which was included in the first measurement report.

According to an embodiment, a base station in a wireless communication system is provided. The base station includes a transceiver, and at least one processor coupled with the transceiver. The at least one processor is configured to transmit, to a user equipment (LTE), configuration information on a measurement report including information on a number of triggering cells, receive, from the LTE, a first measurement report for at least one first cell fulfilling an entry condition, in case that a number of the at least one first cell is larger than or equal to the number of triggering cells, receive, from the LTE, a second measurement report for at least one second cell fulfilling a leaving condition, wherein at least one second cell fulfilling the leaving condition is a cell which was included in the first measurement report.

The disclosure provides an apparatus and a method for effectively performing measurement reporting by an uncrewed aerial vehicle in a wireless communication system.

## BRIEF DESCRIPTION OF THE DRAWINGS

The above and other aspects, features, and advantages of certain embodiments of the disclosure will be more apparent from the following description taken in conjunction with the accompanying drawings, in which:

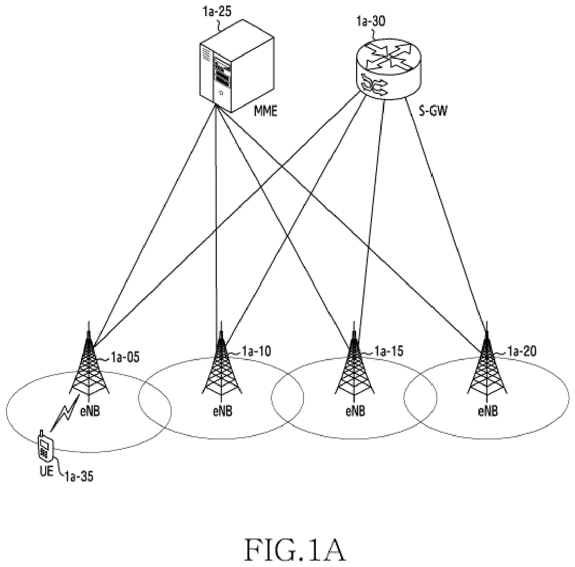

FIG. 1A is a diagram illustrating a structure of an LTE system, according to an embodiment;

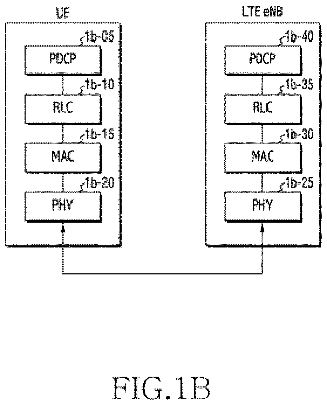

FIG. 1B is a diagram illustrating a radio protocol structure in an LTE system, according to an embodiment;

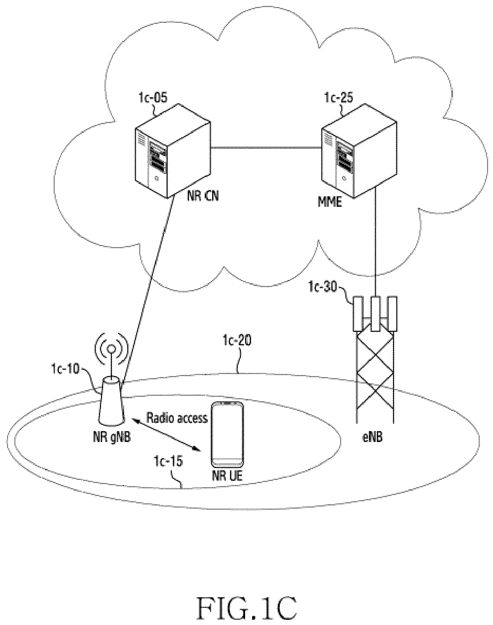

FIG. 1C is a diagram illustrating a structure of a mobile communication system, according to an embodiment;

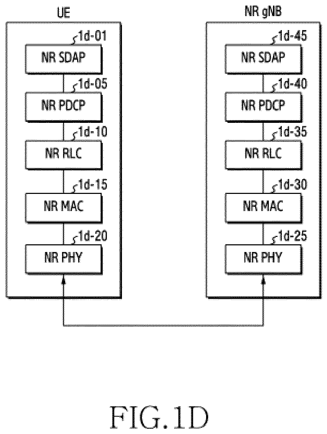

FIG. 1D is a diagram illustrating a wireless protocol structure in a mobile communication system, according to an embodiment;

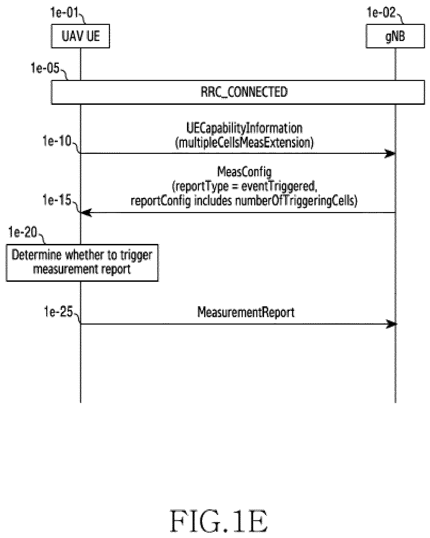

FIG. 1E is a flowchart illustrating a process of transmitting a measurement report by an uncrewed aerial vehicle (UAV) terminal to a base station in a mobile communication system, according to an embodiment;

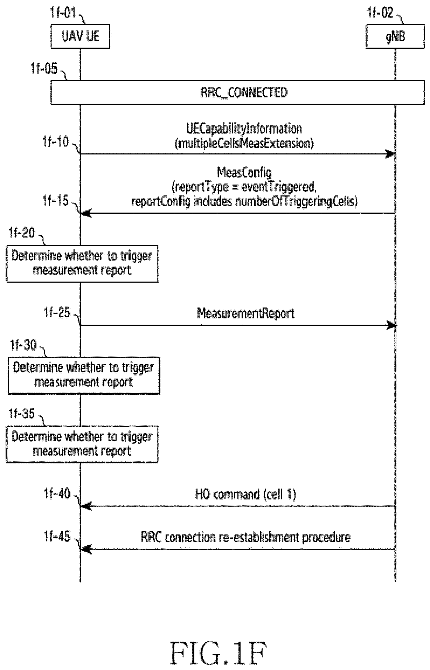

FIG. 1F is a flow diagram illustrating a process in which a handover fails when a UAV LTE transmits a measurement report to a base station in a mobile communication system, according to an embodiment;

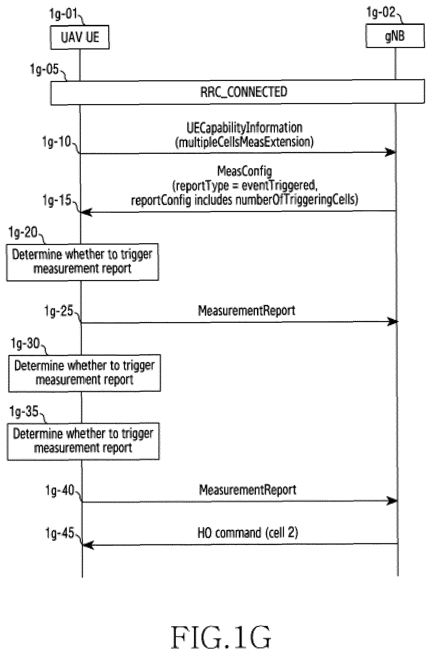

FIG. 1G is a flow diagram illustrating a process in which a UAV LTE efficiently transmits a measurement report to a base station in a mobile communication system, according to an embodiment;

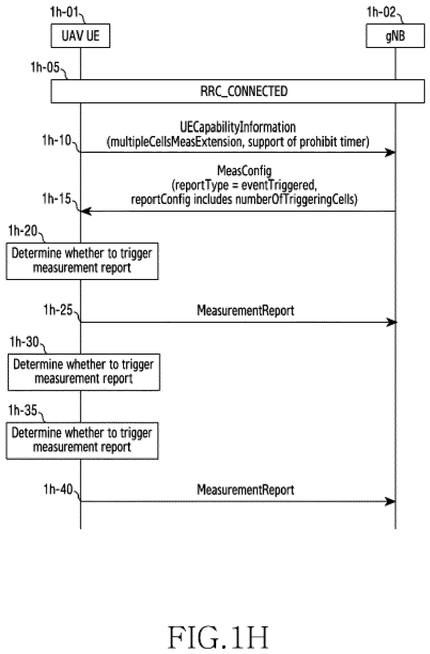

FIG. 1H is a flow diagram illustrating a process in which a UAV LTE efficiently transmits a measurement report to a base station in a mobile communication system, according to an embodiment;

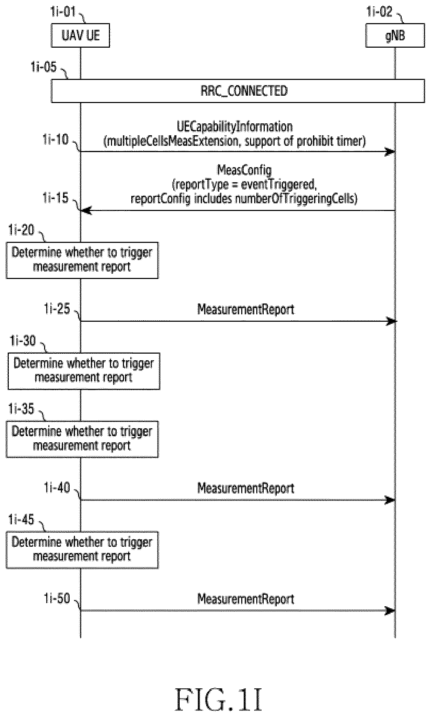

FIG. 1I is a flow diagram illustrating a process in which a UAV LTE efficiently transmits a measurement report to a base station in a mobile communication system, according to an embodiment;

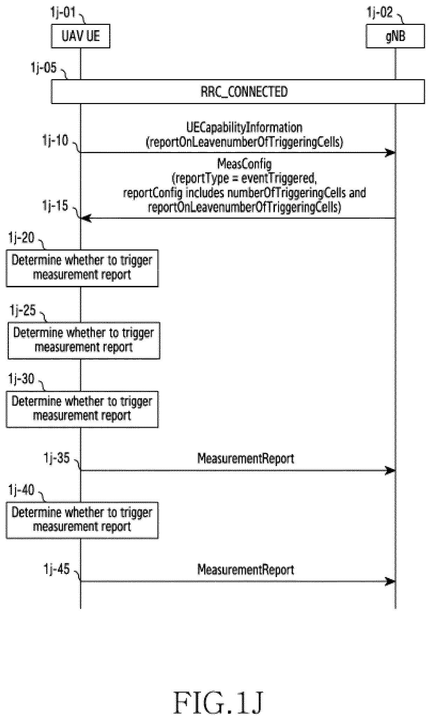

FIG. 1J is a flow diagram illustrating a process in which a UAV UE efficiently transmits a measurement report to a base station in a mobile communication system, according to an embodiment;

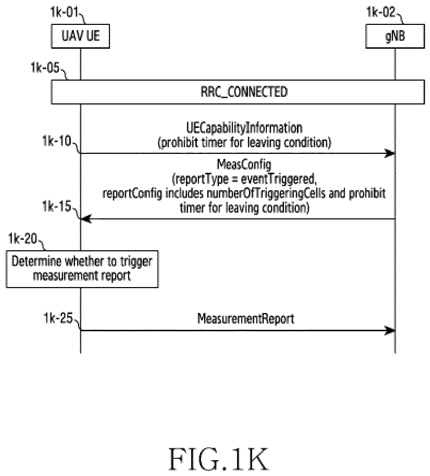

FIG. 1K is a flow diagram illustrating a process in which a UAV LTE efficiently transmits a measurement report to a base station in a mobile communication system, according to an embodiment;

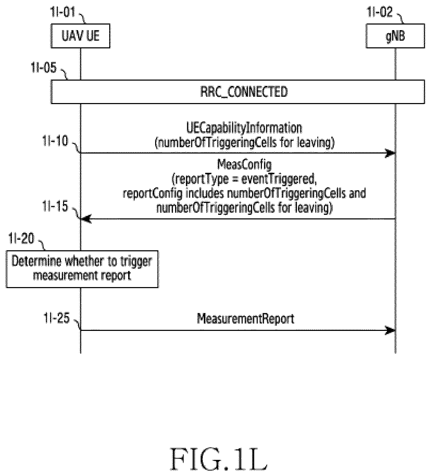

FIG. 1L is a flow diagram illustrating a process in which a UAV UE efficiently transmits a measurement report to a base station in a mobile communication system, according to an embodiment;

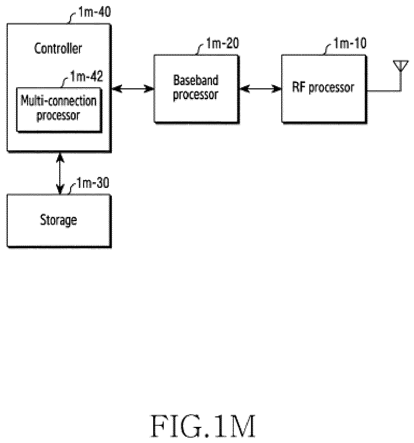

FIG. 1M is a block diagram illustrating an internal structure of a terminal, according to an embodiment; and

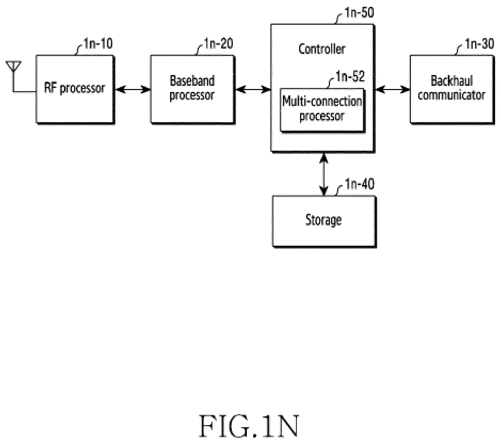

FIG. 1N is a block diagram illustrating a configuration of an NR base station, according to an embodiment.

DETAILED DESCRIPTION

Embodiments of the disclosure will be described in detail with reference to the accompanying drawings. In the following description of the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used herein, the term "unit" refers to a software element or a hardware element, such as a field programmable gate array (FPGA) or an application specific integrated circuit (ASIC), which performs a predetermined function. However, the term "unit" does not always have a meaning limited to software or hardware. A unit may be constructed either to be stored in an addressable storage medium or to execute one or more processors. Therefore, a unit includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by a unit may be either combined into a smaller number of elements, or a unit, or divided into a larger number of elements, or a unit. Moreover, the elements and units or may be implemented to reproduce one or more CPUs within a device or a security multimedia card. Furthermore, a unit may include one or more processors.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as used below, and other terms referring to subjects having equivalent technical meanings may be used.

In the following description, the terms "physical channel" and "signal" may be interchangeably used with the term "data" or "control signal". For example, a physical downlink shared channel (PDSCH) refers to a physical channel over which data is transmitted, but the PDSCH may be used to refer to data. That is, the expression "transmit a physical channel" may be construed as having the same meaning as "transmit data or a signal over a physical channel".

Herein, higher signaling may mean a signal transmission method in which a base station transmits a signal to an electronic device by using a downlink data channel in a physical layer or an electronic device transmits a signal to a base station by using an uplink data channel in a physical layer. The higher signaling may be understood as radio resource control (RRC) signaling or a media access control (MAC) control element (CE).

In the following description, terms and names defined in the 3rd generation partnership project long term evolution (3GPP LTE) standards will be used for the sake of descriptive convenience. However, the disclosure is not limited by these terms and names, and may be applied in the same way to systems that conform other standards

Herein, a base station (BS) is an entity that allocates resources to terminals, and may be at least one of a gNode B (gNB), an eNode B (eNB), a Node B, a wireless access unit, a base station controller, and a node on a network. In the disclosure, the term "eNB" may be interchangeably used with the term "gNB". That is, a base station described as "eNB" may indicate "gNB". A terminal may include a user equipment (LTE), a mobile station (MS), a cellular phone, a smartphone, a computer, or a multimedia system capable of performing communication functions. Examples of the base station and the terminal are not limited thereto.

Embodiments of the disclosure may be applied to the 3GPP NR (5G mobile communication standards). The disclosure may be applied to intelligent services (e.g., smart homes, smart buildings, smart cities, smart cars or connected cars, healthcare, digital education, retail business, security and safety-related services, etc.) on the basis of 5G communication technology and Internet of things (IoT)-related technology.

A wireless communication system is advancing to a broadband wireless communication system for providing high-speed and high-quality packet data services using communication standards, such as high-speed packet access (HSPA) of 3GPP, long-term evolution (LTE) or evolved universal terrestrial radio access (E-UTRA), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an OFDM scheme in a downlink (DL) and employs a single carrier frequency division multiple access (SC-FDMA) scheme in an uplink (UL). The uplink indicates a radio link through which a LTE (or an MS) transmits data or control signals to a BS (or eNode B), and the downlink indicates a radio link through which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include, for example, enhanced mobile broadband (eMBB) communication, massive machine-type communication (mMTC), ultra-reliability low-latency communication (URLLC), and the like.

According to some embodiments, eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the LTE, as well as the maximum data rate. In order to satisfy such requirements, transmission/reception technologies including a further enhanced MIMO transmission technique are required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the IoT in the 5G communication system. mMTC has requirements, such as support of connection of a large number of LTEs in a cell, enhancement coverage of UEs, improved battery time, a reduction in the cost of a LTE, and the like, in order to effectively provide the IoT. Since the IoT provides communication functions while being provided to various sensors and various devices, it must support a large number of UEs (e.g., 1,000,000 LTEs/km2) in a cell. In addition, the LTEs supporting mMTC may require wider coverage than those of other services provided by the 5G communication system because the LTEs are likely to be located in a shadow area, such as a basement of a building, which is not covered by the cell due to the nature of the service. The LTE supporting mMTC must be configured to be inexpensive, and may require a very long battery life-time, such as 10 to 15 years, because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5 ms, and also requires a packet error rate of 10-5 or less. Therefore, for the services supporting URLLC, a 5G system must provide a transmit time interval (TTI) shorter than those of other services, and also may require a design for assigning a large number of resources in a frequency band in order to secure reliability of a communication link.

The above-described three services considered in the 5G communication system (i.e., eMBB, URLLC, and mMTC) may be multiplexed and transmitted in a single system. In order to satisfy different requirements of the respective services, different transmission/reception techniques and transmission/reception parameters may be used between the services. However, the above mMTC, URLLC, and eMBB are merely examples of different types of services, and service types to which embodiments of the disclosure are applied are not limited to the above examples.

Furthermore, in the following description, LTE, LTE-A, LTE Pro, 5G (or NR), or 6G systems will be described by way of example, but the embodiments of the disclosure may also be applied to other communication systems having similar technical backgrounds or channel types. In addition, based on determinations by those skilled in the art, the embodiments of the disclosure may also be applied to other communication systems through some modifications without significantly departing from the scope of the disclosure.

FIG. 1A is a diagram illustrating the structure of an LTE system, according to an embodiment.

Referring to FIG. 1A, as illustrated, the wireless access network of the LTE system may include next-generation base stations (eNB, Node B, or base station) 1a-05, 1a-10, 1a-15, and 1a-20, a mobility management entity (MME) 1a-25, and a serving gateway (S-GW) 1a-30. A LTE or terminal 1a-35 may be connected to an external network through the ENB 1a-05, 1a-10, 1a-15, and 1a-20 and the S-GW 1a-30.

In FIG. 1A, the ENBs 1a-05, 1a-10, 1a-15, and 1a-20 may correspond to the existing node B of a UMTS system. The ENB 1a-05 may be connected to the UE 1a-35 by a wireless channel, and may perform a more complicated role than the existing Node B. In the LTE system, since all user traffic including real-time services such as voice over IP (VoIP), carried over the Internet protocol, are served through a shared channel, a device is required to perform scheduling by collecting status information such as buffer status, available transmission power status, and channel status of LTEs, and the ENBs 1a-05, 1a-10, 1a-15, and 1a-20 may be responsible therefor. One ENB may usually control multiple cells. For example, in order to realize a transmission rate of 100 Mbps, the LTE system may use OFDM in, for example, a 20 MHz bandwidth as a radio access technology. In addition, an adaptive modulation and coding (AMC) method may be applied to determine the modulation scheme and the channel-coding rate according to the state of a channel used by a terminal. The S-GW 1a-30 is a device that provides a data bearer, and may generate or remove a data bearer under the control of the MME 1a-25. The MME is a device that is responsible for various control functions as well as mobility management functions for the terminals, and may be connected to multiple base stations.

FIG. 1B is a diagram illustrating the structure of a wireless protocol of an LTE system, according to an embodiment.

Referring to FIG. 1B, the wireless protocol of the LTE system may include a packet data convergence protocol (PDCP) 1b-05 and 1b-40, a radio link control (RLC) 1b-10 and 1b-35, and a MAC 1b-15 and 1b-30, in a terminal and eNB, respectively. The PDCPs 1b-05 and 1b-40 may be responsible for IP header compression/restoration. The main functions of the PDCP may be summarized as follows:

- Header compression and decompression: ROHC only
- Transfer of user data
- In-sequence delivery of upper-layer packet data units (PDUs) at PDCP re-establishment procedure for RLC AM
- For split bearers in direct current (DC) (only support for RLC acknowledge mode (AM)): PDCP PDU routing for transmission and PDCP PDU reordering for reception
- Duplicate detection of lower-layer service data units (SDUs) at PDCP re-establishment procedure for RLC AM
- Retransmission of PDCP SDUs at handover and, for split bearers in DC, of PDCP PDUs at PDCP data recovery procedure, for RLC AM
- Ciphering and deciphering
- Timer-based SDU discard in uplink

The RLC 1b-10 and 1b-35 may reconfigure the PDCP PDU to an appropriate size to perform an automatic repeat request (ARQ) operation. The main functions of the RLC may be summarized as follows:

- Transfer of upper-layer PDUs
- Error Correction through ARQ (only for AM data transfer)
- Concatenation, segmentation and reassembly of RLC SDUs (only for unacknowledged mode (UM) and AM data transfer)
- Re-segmentation of RLC data PDUs (only for AM data transfer)
- Reordering of RLC data PDUs (only for UM and AM data transfer
- Duplicate detection (only for UM and AM data transfer)

- Protocol error detection (only for AM data transfer)
- RLC SDU discard (only for UM and AM data transfer)
- RLC re-establishment

The MACs 1b-15 and 1b-30 may be connected to various RLC-layer devices configured in a terminal, and perform operations of multiplexing RLC PDUs to MAC PDUs and demultiplexing RLC PDUs from MAC PDUs. The main functions of MAC may be summarized as follows:

- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- Error correction through hybrid ARQ (HARQ)
- Priority handling between logical channels of one LTE
- Priority handling between LTEs by means of dynamic scheduling
- Multimedia broadcast multicast service (MBMS) service identification function
- Transport format selection function
- Padding function

The physical layers 1b-20 and 1b-25 may channel-code and modulate the upper-layer data, convert the same into an OFDM symbol, and transmit the same to a radio channel, or may demodulate and channel decode an OFDM symbol received through the radio channel and transmit the same to the upper layer.

FIG. 1C is a diagram illustrating the structure of a mobile communication system, according to an embodiment.

Referring to FIG. 1C, as illustrated, the radio access network of the mobile communication (or wireless communication) system (hereinafter, referred to as NR or 5G) may include a next-generation base station (new-radio Node B, hereinafter, NR gNB or NR base station) 1c-10 and new-radio core network (NR CN) 1c-05. The user terminal (new-radio user equipment, NR LTE, or terminal) 1c-15 may access the external network through the NR gNB 1c-10 and the NR CN 1c-05.

In FIG. 1C, the NR gNB 1c-10 may correspond to an eNB of an existing LTE system. The NR gNB 1c-10 is connected to the NR LTE 1c-15 through a wireless channel and may provide superior service than the existing Node B. In the mobile communication system, since all user traffic is served through a shared channel, a device is required to collect and schedule status information such as buffer status of LTEs, available transmission power status, and channel status, and the NR NB 1c-10 may be responsible therefor. One NR gNB may usually control multiple cells. In order to implement ultra-high-speed data transmission compared to the current LTE, more than the existing maximum bandwidth may be provided, and OFDM radio access technology may be additionally combined with beamforming technology. In addition, an adaptive modulation and coding (AMC) method may be applied to determine the modulation scheme and the channel-coding rate according to the state of a channel used by a terminal. The NR CN 1c-05 may perform functions such as mobility support, bearer setup, and quality of service (QoS) configuration. The NR core network (CN) is a device that is responsible for various control functions as well as mobility management functions for a terminal, and may be connected to multiple base stations. In addition, the mobile communication system may be linked with the existing LTE system, and the NR CN may be connected to the MME 1c-25 through a network interface. The MME may be connected to the existing base station eNB 1c-30.

FIG. 1D is a diagram illustrating the structure of a wireless protocol of a mobile communication system, according to an embodiment.

Referring to FIG. 1D, the wireless protocol structure of a mobile communication system may include NR service data adaptation protocols (SDAPs) 1d-01 and 1d-45, NR PDCPs 1d-05 and 1d-40, NRRLCs 1d-10 and 1d-35, and NR MACs 1d-15 and 1d-30 in a terminal and an NR base station, respectively.

The main functions of the NR SDAPs 1d-01 and 1d-45 may include some of the following functions:

Transfer of user-plane data
Mapping between a QoS flow and a data radio bearer (DRB) for both DL and UL
Marking QoS flow ID in both DL and UL packets
Mapping reflective QoS flow to DRB mapping for the UL SDAP PDUs

For the SDAP-layer device, the UE may be configured with regard to whether to use the header of the SDAP-layer device or the function of the SDAP-layer device for each PDCP-layer device, for each bearer, or for each logical channel through an RRC message, and when the SDAP header is configured, the non-access stratum (NAS) QoS reflection configuration 1-bit indicator (NAS reflective QoS) of the SDAP header and the AS QoS reflection configuration 1-bit indicator (AS reflective QoS) may indicate that the terminal may update or reset the QoS flow of uplink and downlink and mapping information for the data bearer. The SDAP header may include QoS flow ID information indicating QoS. The QoS information may be used as data-processing priority and scheduling information to support smooth service.

The main functions of the NR PDCPs 1d-05 and 1d-40 may include some of the following functions:
Header compression and decompression: ROHC only

- Transfer user data
- In-sequence delivery of upper-layer PDUs
- Out-of-sequence delivery of upper-layer PDUs
- PDCP PDU reordering for reception
- Duplicate detection of lower-layer SDUs
- Retransmission of PDCP SDUs
- Ciphering and deciphering
- Timer-based SDU discard in uplink

In the above, a reordering function of the NR PDCP device (reordering) refers to a function of reordering PDCP PDUs received from a lower layer in order based on PDCP sequence numbers (SN), and may include transmitting data to an upper layer in a reordered order, or may include a function for immediately transmitting without consideration of the order, may include a function for reordering the order to record the lost PDCP PDUs, may include a function for sending a status report for the lost PDCP PDUs to the transmitting side, and may include a function for requesting retransmission for lost PDCP PDUs.

The main functions of the NR RLCs 1d-10 and 1d-35 may include some of the following functions:

- Transfer of upper-layer PDUs
- In-sequence delivery of upper-layer PDUs
- Out-of-sequence delivery of upper-layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

In the above, the in-sequence delivery of the NR RLC device refers to a function of sequentially transmitting RLC SDUs received from a lower layer to an upper layer. Originally, when one RLC SDU is received by being divided into several RLC SDUs, it may include a function of reassembling and transmitting the same, may include a function of rearranging the received RLC PDUs based on an RLC sequence number (SN) or a sequence number (PDCP SN), may include a function of rearranging the order to record the lost RLC PDUs, may include a function for transmitting a status report for the lost RLC PDUs to the transmitting side, and may include a function for requesting retransmission for the lost RLC PDUs. If there is a lost RLC SDU, it may include a function of transmitting only the RLC SDUs up to the lost RLC SDU to the upper layer in sequence. Alternatively, even if there is a lost RLC SDU, if a predetermined timer has expired, a function of delivering all RLC SDUs received before the timer starts, in sequence, to an upper layer may be included. Alternatively, even if there is a lost RLC SDU, if a predetermined timer expires, a function of delivering all RLC SDUs received so far to the upper layer in sequence may be included. In addition, the RLC PDUs may be processed in the order in which they are received (regardless of the sequence number, in the order of arrival) and delivered to the PDCP device in any order (out-of-sequence delivery). In the case of segments, segments that are stored in a buffer or that are to be received at a later time may be received, reconstructed into a complete RLC PDU, processed, and then delivered to a PDCP device. The NR RLC layer may not include a concatenation function, and the function may be performed in the NR MAC layer, or may be replaced by a multiplexing function of the NR MAC layer.

The out-of-sequence delivery of the NR RLC device refers to a function of directly transmitting RLC SDUs received from a lower layer to an upper layer regardless of order. Originally, when one RLC SDU is divided into multiple RLC SDUs and received, it may include a function of reassembling and transmitting the same, and may include a function of storing the RLC SN or PDCP SN of the received RLC PDUs and arranging the order to record the lost RLC PDUs.

The NR MACs 1d-15 and 1d-30 may be connected to various NR RLC-layer devices configured in a terminal, and the main function of the NR MAC may include some of the following functions:

- Mapping Between Logical Channels and Transport Channels
- Multiplexing/demultiplexing of MAC SDUs
- Scheduling information reporting
- Error correction through HARQ
- Priority handling between logical channels of one LTE
- Priority handling between LTEs by means of dynamic scheduling
- MBMS service identification
- Transport format selection
- Padding function

The NR PHY layers 1d-20 and 1d-25 may perform an operation of channel-coding and modulating upper-layer data, making an OFDM symbol and transmitting the same on a radio channel, or demodulating and channel-decoding an OFDM symbol received via the radio channel and transmitting the same to an upper layer.

FIG. 1E is a flow diagram illustrating a process in which a UAV UE transmits a measurement report to a base station in a mobile communication system, according to embodiments.

The UAV UE may have a feature enabling a probability of a higher line of sight than that of a terrestrial LTE. Therefore, compared to a terrestrial terminal, the UAV LTE may have a disadvantage of receiving DL interference from more cells. That is, the UAV LTE may receive a higher level of DL interference from more neighboring cells than that of a terrestrial terminal. Similarly, the UAV LTE may cause UL interference to more cells than a terrestrial terminal. A method is provided for reporting a measurement report to a base station according to the feature of the UAV UE.

Referring to FIG. 1E, a UAV UE 1e-01 may be in an RRC connected mode (RRC_CONNECTED) by establishing an RRC connection with an NR base station 1e-02.

In operation 1e-10, the UE may transmit a UE capability information message (LTECapabilityInformation) to the base station. The message may include whether a measurement reporting configuration supports numberOfTriggeringCells (multipleCellsMeasExtension). The multipleCellsMeasExtension may indicate whether the UE is capable of deciding (identifying or detecting) whether there are cells that simultaneously satisfy a specific event condition as many as the number of cells (numberOfTriggeringCells) configured by the base station, not a single cell, when determining whether a specific event condition is satisfied, and transmitting a measurement report to the base station.

In operation 1e-15, the base station may transmit a predetermined RRC message (e.g., RRCResume or RRCReconfiguration) including measurement configuration information (MeasConfig) to the LTE. The measurement configuration information may contain (or include) reporting configuration information (reportConfigToAddModList) containing event triggering conditions. The reportConfigToAddModList may include one or more reportConfigToAddMods, each reportConfigToAddMod may be configured as follows:

```
ReportConfigToAddMod ::=          SEQUENCE {
    reportConfigId               ReportConfigId,
    reportConfig                 CHOICE {
        reportConfigNR               ReportConfigNR,
        ...,
        reportConfigInterRAT         ReportConfigInterRAT,
        reportConfigNR-SL-r16        ReportConfigNR-SL-r16
    }
}


ReportConfigNR ::=                SEQUENCE {
    reportType                   CHOICE {
        periodical                   PeriodicalReportConfig,
        eventTriggered               EventTriggerConfig,
        ...,
        reportCGI                    ReportCGI,
        reportSFTD                   ReportSFTD-NR,
        condTriggerConfig-r16            CondTriggerConfig-r16,
        cli-Periodical-r16           CLI-PeriodicalReportConfig-r16,
        cli-EventTriggered-r16           CLI-EventTriggerConfig-r16,
        rxTxPeriodical-r17           RxTxPeriodical-r17
    }
}


ReportCGI ::=            SEQUENCE {
    cellForWhichToReportCGI      PhysCellId,
    ...,
    [[
    useAutonomousGaps-r16        ENUMERATED {setup}           OPTIONAL   --
Need R
```

```
        ]]

    }


ReportSFTD-NR ::=              SEQUENCE {
    reportSFTD-Meas           BOOLEAN,
    reportRSRP              BOOLEAN,

    ...,
    [[
    reportSFTD-NeighMeas      ENUMERATED {true}              OPTIONAL,
-- Need R
    drx-SFTD-NeighMeas        ENUMERATED {true}              OPTIONAL,
-- Need R
    cellsForWhichToReportSFTD          SEQUENCE (SIZE (1..maxCellSFTD)) OF
PhysCellId  OPTIONAL    -- Need R
    ]]
    }


CondTriggerConfig-r16 ::=     SEQUENCE {
    condEventId            CHOICE {
        condEventA3              SEQUENCE {
            a3-Offset            MeasTriggerQuantityOffset,
            hysteresis          Hysteresis,
            timeToTrigger          TimeToTrigger
        },
        condEventA5              SEQUENCE {
            a5-Threshold1            MeasTriggerQuantity,
            a5-Threshold2            MeasTriggerQuantity,
            hysteresis          Hysteresis,
            timeToTrigger          TimeToTrigger
```

```
    },

    ...,

    condEventA4-r17              SEQUENCE {
        a4-Threshold-r17                MeasTriggerQuantity,
        hysteresis-r17              Hysteresis,
        timeToTrigger-r17               TimeToTrigger
    },

    condEventD1-r17              SEQUENCE {
        distanceThreshFromReference1-r17 INTEGER(0.. 65525),
        distanceThreshFromReference2-r17 INTEGER(0.. 65525),
        referenceLocation1-r17          ReferenceLocation-r17,
        referenceLocation2-r17          ReferenceLocation-r17,
        hysteresis-r17              HysteresisLocation-r17,
        timeToTrigger-r17               TimeToTrigger
    },

    condEventT1-r17              SEQUENCE {
        t1-Threshold-r17                INTEGER (0..549755813887),
        duration-r17                INTEGER (1..6000)
    }
},
rsType-r16              NR-RS-Type,

...
}


EventTriggerConfig::=               SEQUENCE {
    eventId                 CHOICE {
        eventA1                 SEQUENCE {
            a1-Threshold                MeasTriggerQuantity,
            reportOnLeave               BOOLEAN,
            hysteresis              Hysteresis,
```

```
    timeToTrigger              TimeToTrigger
},
eventA2                        SEQUENCE {
    a2-Threshold                   MeasTriggerQuantity,
    reportOnLeave                  BOOLEAN,
    hysteresis                     Hysteresis,
    timeToTrigger                  TimeToTrigger
},
eventA3                        SEQUENCE {
    a3-Offset                      MeasTriggerQuantityOffset,
    reportOnLeave                  BOOLEAN,
    hysteresis                     Hysteresis,
    timeToTrigger                  TimeToTrigger,
    useAllowedCellList             BOOLEAN
},
eventA4                        SEQUENCE {
    a4-Threshold                   MeasTriggerQuantity,
    reportOnLeave                  BOOLEAN,
    hysteresis                     Hysteresis,
    timeToTrigger                  TimeToTrigger,
    useAllowedCellList             BOOLEAN
},
eventA5                        SEQUENCE {
    a5-Threshold1                  MeasTriggerQuantity,
    a5-Threshold2                  MeasTriggerQuantity,
    reportOnLeave                  BOOLEAN,
    hysteresis                     Hysteresis,
    timeToTrigger                  TimeToTrigger,
    useAllowedCellList             BOOLEAN
},
```

```
eventA6                          SEQUENCE {
    a6-Offset                        MeasTriggerQuantityOffset,
    reportOnLeave                    BOOLEAN,
    hysteresis                   Hysteresis,
    timeToTrigger                    TimeToTrigger,
    useAllowedCellList               BOOLEAN
},

...,

[[
eventX1-r17                      SEQUENCE {
    x1-Threshold1-Relay-r17              SL-MeasTriggerQuantity-r16,
    x1-Threshold2-r17                MeasTriggerQuantity,
    reportOnLeave-r17                BOOLEAN,
    hysteresis-r17               Hysteresis,
    timeToTrigger-r17                TimeToTrigger,
    useAllowedCellList-r17           BOOLEAN
},
eventX2-r17                      SEQUENCE {
    x2-Threshold-Relay-r17               SL-MeasTriggerQuantity-r16,
    reportOnLeave-r17                BOOLEAN,
    hysteresis-r17               Hysteresis,
    timeToTrigger-r17                TimeToTrigger
},
eventD1-r17                      SEQUENCE {
    distanceThreshFromReference1-r17         INTEGER(1.. 65525),
    distanceThreshFromReference2-r17         INTEGER(1.. 65525),
    referenceLocation1-r17               ReferenceLocation-r17,
    referenceLocation2-r17               ReferenceLocation-r17,
    reportOnLeave-r17                BOOLEAN,
    hysteresisLocation-r17               HysteresisLocation-r17,
```

```
            timeToTrigger-r17              TimeToTrigger
         }
       ]]
    },
    rsType                        NR-RS-Type,
    reportInterval                ReportInterval,
    reportAmount                      ENUMERATED {r1, r2, r4, r8, r16, r32, r64,
infinity},
    reportQuantityCell            MeasReportQuantity,
    maxReportCells                INTEGER (1..maxCellReport),
    reportQuantityRS-Indexes                          MeasReportQuantity
OPTIONAL,  -- Need R
    maxNrofRS-IndexesToReport         INTEGER (1..maxNrofIndexesToReport)
OPTIONAL,  -- Need R
    includeBeamMeasurements       BOOLEAN,
    reportAddNeighMeas                          ENUMERATED {setup}
OPTIONAL,  -- Need R

    ...,

    [[
    measRSSI-ReportConfig-r16                     MeasRSSI-ReportConfig-r16
OPTIONAL,  -- Need R
    useT312-r16         BOOLEAN                            OPTIONAL,
-- Need M
    includeCommonLocationInfo-r16                    ENUMERATED {true}
OPTIONAL,  -- Need R
    includeBT-Meas-r16                        SetupRelease {BT-NameList-r16}
OPTIONAL,  -- Need M
    includeWLAN-Meas-r16                      SetupRelease {WLAN-NameList-r16}
OPTIONAL,  -- Need M
```

```
        includeSensor-Meas-r16                          SetupRelease {Sensor-NameList-r16}
OPTIONAL    -- Need M

        ]],

        [[

        coarseLocationRequest-r17                              ENUMERATED  {true}
OPTIONAL,  -- Need R

        reportQuantityRelay-r17                          SL-MeasReportQuantity-r16
OPTIONAL   -- Need R

        ]]

      }


      PeriodicalReportConfig ::=           SEQUENCE {
        rsType                          NR-RS-Type,
        reportInterval                  ReportInterval,
        reportAmount                        ENUMERATED {r1, r2, r4, r8, r16, r32, r64,
infinity},
        reportQuantityCell              MeasReportQuantity,
        maxReportCells                  INTEGER (1..maxCellReport),
        reportQuantityRS-Indexes                                MeasReportQuantity
OPTIONAL,  -- Need R
        maxNrofRS-IndexesToReport           INTEGER (1..maxNrofIndexesToReport)
OPTIONAL,  -- Need R
        includeBeamMeasurements         BOOLEAN,
        useAllowedCellList              BOOLEAN,

        ...,

        [[
        measRSSI-ReportConfig-r16                        MeasRSSI-ReportConfig-r16
OPTIONAL,  -- Need R
        includeCommonLocationInfo-r16                    ENUMERATED  {true}
OPTIONAL,  -- Need R
```

```
            includeBT-Meas-r16                        SetupRelease {BT-NameList-r16}
OPTIONAL,   -- Need M
            includeWLAN-Meas-r16                      SetupRelease {WLAN-NameList-r16}
OPTIONAL,   -- Need M
            includeSensor-Meas-r16                    SetupRelease {Sensor-NameList-r16}
OPTIONAL,   -- Need M
            ul-DelayValueConfig-r16                   SetupRelease { UL-DelayValueConfig-r16 }
OPTIONAL,   -- Need M
            reportAddNeighMeas-r16                               ENUMERATED {setup}
OPTIONAL   -- Need R
            ]],
            [[
            ul-ExcessDelayConfig-r17        SetupRelease { UL-ExcessDelayConfig-r17 }
OPTIONAL,   -- Need M
            coarseLocationRequest-r17                           ENUMERATED  {true}
OPTIONAL,   -- Need R
            reportQuantityRelay-r17                     SL-MeasReportQuantity-r16
OPTIONAL   -- Need R
            ]]
        }


        NR-RS-Type ::=              ENUMERATED {ssb, csi-rs}


        MeasTriggerQuantity ::=             CHOICE {
            rsrp                    RSRP-Range,
            rsrq                    RSRQ-Range,
            sinr                    SINR-Range
        }


        MeasTriggerQuantityOffset ::=       CHOICE {
```

```
    rsrp                    INTEGER (-30..30),

    rsrq                    INTEGER (-30..30),

    sinr                    INTEGER (-30..30)

}


MeasReportQuantity ::=          SEQUENCE {

    rsrp            BOOLEAN,

    rsrq            BOOLEAN,

    sinr            BOOLEAN

}


MeasRSSI-ReportConfig-r16 ::=          SEQUENCE {

    channelOccupancyThreshold-r16          RSSI-Range-r16          OPTIONAL   --
Need R

}


CLI-EventTriggerConfig-r16 ::=          SEQUENCE {

    eventId-r16                 CHOICE {

        eventI1-r16                 SEQUENCE {

            i1-Threshold-r16                 MeasTriggerQuantityCLI-r16,

            reportOnLeave-r16                 BOOLEAN,

            hysteresis-r16                 Hysteresis,

            timeToTrigger-r16                 TimeToTrigger

        },

        ...

    },

    reportInterval-r16          ReportInterval,

    reportAmount-r16                 ENUMERATED {r1, r2, r4, r8, r16, r32, r64,
infinity},
```

```
        maxReportCLI-r16                    INTEGER (1..maxCLI-Report-r16),

        ...

    }


CLI-PeriodicalReportConfig-r16 ::=        SEQUENCE {
    reportInterval-r16                ReportInterval,
    reportAmount-r16                    ENUMERATED {r1, r2, r4, r8, r16, r32, r64,
infinity},
    reportQuantityCLI-r16             MeasReportQuantityCLI-r16,
    maxReportCLI-r16                  INTEGER (1..maxCLI-Report-r16),

    ...

    }


RxTxPeriodical-r17  ::=           SEQUENCE {
    rxTxReportInterval-r17        RxTxReportInterval-r17              OPTIONAL,
-- Need R
    reportAmount-r17                    ENUMERATED {r1, infinity, spare6, spare5,
spare4, spare3, spare2, spare1},

    ...

    }


RxTxReportInterval-r17                       ::=                       ENUMERATED
{ms80,ms120,ms160,ms240,ms320,ms480,ms640,ms1024,ms1280,ms2048,ms2560,ms5120,
spare4,spare3,spare2,spare1}


MeasTriggerQuantityCLI-r16 ::=        CHOICE {
    srs-RSRP-r16                      SRS-RSRP-Range-r16,
    cli-RSSI-r16                      CLI-RSSI-Range-r16

    }
```

```
MeasReportQuantityCLI-r16 ::=            ENUMERATED {srs-rsrp, cli-rssi}


ReportConfigInterRAT ::=               SEQUENCE {
    reportType                     CHOICE {
        periodical                 PeriodicalReportConfigInterRAT,
        eventTriggered             EventTriggerConfigInterRAT,
        reportCGI                  ReportCGI-EUTRA,

        ...,
        reportSFTD                 ReportSFTD-EUTRA
    }
}


ReportCGI-EUTRA ::=                SEQUENCE {
    cellForWhichToReportCGI    EUTRA-PhysCellId,

    ...,
    [[
    useAutonomousGaps-r16      ENUMERATED {setup}          OPTIONAL  -
- Need R
    ]]
}


ReportSFTD-EUTRA ::=               SEQUENCE {
    reportSFTD-Meas                BOOLEAN,
    reportRSRP                     BOOLEAN,

    ...
}


EventTriggerConfigInterRAT ::=         SEQUENCE {
    eventId                    CHOICE {
        eventB1                        SEQUENCE {
```

```
        b1-ThresholdEUTRA                MeasTriggerQuantityEUTRA,
        reportOnLeave                    BOOLEAN,
        hysteresis                       Hysteresis,
        timeToTrigger                    TimeToTrigger,

        ...
    },
    eventB2                     SEQUENCE {
        b2-Threshold1                    MeasTriggerQuantity,
        b2-Threshold2EUTRA                 MeasTriggerQuantityEUTRA,
        reportOnLeave                    BOOLEAN,
        hysteresis                       Hysteresis,
        timeToTrigger                    TimeToTrigger,

        ...
    },
    ...,
    [[
    eventB1-UTRA-FDD-r16            SEQUENCE {
        b1-ThresholdUTRA-FDD-r16             MeasTriggerQuantityUTRA-FDD-
r16,

        reportOnLeave-r16                BOOLEAN,
        hysteresis-r16                   Hysteresis,
        timeToTrigger-r16                TimeToTrigger,

        ...
    },
    eventB2-UTRA-FDD-r16            SEQUENCE {
        b2-Threshold1-r16                MeasTriggerQuantity,
        b2-Threshold2UTRA-FDD-r16             MeasTriggerQuantityUTRA-FDD-
r16,

        reportOnLeave-r16                BOOLEAN,
        hysteresis-r16                   Hysteresis,
```

```
            timeToTrigger-r16          TimeToTrigger,

            ...

        }

    ]],

    [[

    eventY1-Relay-r17              SEQUENCE {

        y1-Threshold1-r17              MeasTriggerQuantity,

        y1-Threshold2-Relay-r17          SL-MeasTriggerQuantity-r16,

        reportOnLeave-r17              BOOLEAN,

        hysteresis-r17              Hysteresis,

        timeToTrigger-r17              TimeToTrigger,

        ...

    },

    eventY2-Relay-r17              SEQUENCE {

        y2-Threshold-Relay-r17          SL-MeasTriggerQuantity-r16,

        reportOnLeave-r17              BOOLEAN,

        hysteresis-r17              Hysteresis,

        timeToTrigger-r17              TimeToTrigger,

        ...

    }

    ]]

},

rsType              NR-RS-Type,


reportInterval          ReportInterval,

reportAmount              ENUMERATED {r1, r2, r4, r8, r16, r32, r64, infinity},

reportQuantity          MeasReportQuantity,

maxReportCells              INTEGER (1..maxCellReport),

...,

[[
```

```
                reportQuantityUTRA-FDD-r16            MeasReportQuantityUTRA-FDD-r16
OPTIONAL   -- Need R

                ]],

                [[

                includeCommonLocationInfo-r16                ENUMERATED    {true}
OPTIONAL,   -- Need R

                includeBT-Meas-r16                   SetupRelease  {BT-NameList-r16}
OPTIONAL,   -- Need M

                includeWLAN-Meas-r16                 SetupRelease  {WLAN-NameList-r16}
OPTIONAL,   -- Need M

                includeSensor-Meas-r16               SetupRelease  {Sensor-NameList-r16}
OPTIONAL   -- Need M

                ]],

                [[

                reportQuantityRelay-r17                    SL-MeasReportQuantity-r16
OPTIONAL   -- Need R

                ]]}


        PeriodicalReportConfigInterRAT ::=        SEQUENCE {
                reportInterval               ReportInterval,
                reportAmount                       ENUMERATED {r1, r2, r4, r8, r16, r32, r64,
infinity},

                reportQuantity               MeasReportQuantity,
                maxReportCells                INTEGER (1..maxCellReport),

                ...,

                [[

                reportQuantityUTRA-FDD-r16                MeasReportQuantityUTRA-FDD-r16
OPTIONAL   -- Need R

                ]],

                [[
```

```
        includeCommonLocationInfo-r16                    ENUMERATED    {true}
OPTIONAL,  -- Need R
        includeBT-Meas-r16                               SetupRelease  {BT-NameList-r16}
OPTIONAL,  -- Need M
        includeWLAN-Meas-r16                             SetupRelease  {WLAN-NameList-r16}
OPTIONAL,  -- Need M
        includeSensor-Meas-r16                           SetupRelease  {Sensor-NameList-r16}
OPTIONAL   -- Need M
        ]],
        [[
        reportQuantityRelay-r17                          SL-MeasReportQuantity-r16
OPTIONAL   -- Need R
        ]]


        }


MeasTriggerQuantityUTRA-FDD-r16 ::=        CHOICE{
    utra-FDD-RSCP-r16                 INTEGER (-5..91),
    utra-FDD-EcN0-r16                 INTEGER (0..49)
    }


MeasReportQuantityUTRA-FDD-r16 ::=        SEQUENCE {
    cpich-RSCP                   BOOLEAN,
    cpich-EcN0                   BOOLEAN
    }
```

Herein, reportType may be configured as eventTriggered, and numberOfTriggeringCells may be included in predetermined event configuration information (e.g., EventA3, EventA4, EventA5, EventB1, and EventB2). The numberOfTriggeringCells may indicate the number of sensed (decided, identified, or detected) cells that are required to fulfill a predetermined event for a measurement report to be triggered.

The event condition may be as follows:

5.5.4.4 Event A3 (Neighbour becomes offset better than SpCell)

The UE shall:

1> consider the entering condition for this event to be satisfied when condition A3-1, as specified below, is fulfilled;
1> consider the leaving condition for this event to be satisfied when condition A3-2, as specified below, is fulfilled;
1> use the SpCell for *Mp, Ofp and Ocp.*

NOTE 1: The cell(s) that triggers the event has reference signals indicated in the *measObjectNR* associated to this event which may be different from the NR SpCell *measObjectNR.*

## Inequality A3-1 (Entering condition)

$$Mn + Ofn + Ocn - Hys > Mp + Ofp + Ocp + Off$$

## Inequality A3-2 (Leaving condition)

$$Mn + Ofn + Ocn + Hys < Mp + Ofp + Ocp + Off$$

The variables in the formula are defined as follows:
*Mn* is the measurement result of the neighbouring cell, not taking into account any offsets.
*Ofn* is the measurement object specific offset of the reference signal of the neighbour cell (i.e., *offsetMO* as defined within *measObjectNR* corresponding to the neighbour cell).
*Ocn* is the cell specific offset of the neighbour cell (i.e., *cellIndividualOffset* as defined within *measObjectNR* corresponding to the frequency of the neighbour cell), and set to zero if not configured for the neighbour cell.
*Mp* is the measurement result of the SpCell, not taking into account any offsets.
*Ofp* is the measurement object specific offset of the SpCell (i.e., *offsetMO* as defined within *measObjectNR* corresponding to the SpCell).
*Ocp* is the cell specific offset of the SpCell (i.e., *cellIndividualOffset* as defined within *measObjectNR* corresponding to the SpCell), and is set to zero if not configured for the SpCell.
*Hys* is the hysteresis parameter for this event (i.e., *hysteresis* as defined within *reportConfigNR* for this event).
*Off* is the offset parameter for this event (i.e., *a3-Offset* as defined within *reportConfigNR* for this event).
*Mn, Mp* are expressed in dBm in case of RSRP, or in dB in case of RSRQ and RS-SINR.
*Ofn, Ocn, Ofp, Ocp, Hys, Off* are expressed in dB.
NOTE 2: The definition of Event A3 also applies to CondEvent A3.

5.5.4.5 Event A4 (Neighbour becomes better than threshold)

The UE shall:

1> consider the entering condition for this event to be satisfied when condition A4-1, as specified below, is fulfilled;
1> consider the leaving condition for this event to be satisfied when condition A4-2, as specified below, is fulfilled.

## Inequality A4-1 (Entering condition)

$$Mn + Ofn + Ocn - Hys > Thresh$$

## Inequality A4-2 (Leaving condition)

$$Mn + Ofn + Ocn + Hys < Thresh$$

The variables in the formula are defined as follows:
*Mn* is the measurement result of the neighbouring cell, not taking into account any offsets.
*Ofn* is the measurement object specific offset of the neighbour cell (i.e., *offsetMO* as defined within *measObjectNR* corresponding to the neighbour cell).
*Ocn* is the measurement object specific offset of the neighbour cell (i.e., *cellIndividualOffset* as defined within *measObjectNR* corresponding to the neighbour cell), and set to zero if not configured for the neighbour cell.
*Hys* is the hysteresis parameter for this event (i.e., *hysteresis* as defined within *reportConfigNR* for this event).
*Thresh* is the threshold parameter for this event (i.e., *a4-Threshold* as defined within *reportConfigNR* for this event).
*Mn* is expressed in dBm in case of RSRP, or in dB in case of RSRQ and RS-SINR.
*Ofn, Ocn, Hys* are expressed in dB.

*Thresh* is expressed in the same unit as *Mn.*
NOTE: The definition of Event A4 also applies to CondEvent A4.

5.5.4.6 Event A5 (SpCell becomes worse than threshold1 and neighbour becomes better than threshold2)

The UE shall:

> 1> consider the entering condition for this event to be satisfied when both condition A5-1 and condition A5-2, as specified below, are fulfilled;
> 1> consider the leaving condition for this event to be satisfied when condition A5-3 or condition A5-4, i.e., at least one of the two, as specified below, is fulfilled;
> 1> use the SpCell for *Mp*.

NOTE 1: The parameters of the reference signal(s) of the cell(s) that triggers the event are indicated in the *measObjectNR* associated to the event which may be different from the *measObjectNR* of the NR SpCell.

Inequality A5-1 (Entering condition 1)

$$Mp + Hys < Thresh1$$

Inequality A5-2 (Entering condition 2)

$$Mn + Ofn + Ocn - Hys > Thresh2$$

Inequality A5-3 (Leaving condition 1)

$$Mp - Hys > Thresh1$$

Inequality A5-4 (Leaving condition 2)

$$Mn + Ofn + Ocn + Hys < Thresh2$$

The variables in the formula are defined as follows:
*Mp* is the measurement result of the NR SpCell, not taking into account any offsets.
*Mn* is the measurement result of the neighbouring cell, not taking into account any offsets.
*Ofn* is the measurement object specific offset of the neighbour cell (i.e., *offsetMO* as defined within *measObjectNR* corresponding to the neighbour cell).
*Ocn* is the cell specific offset of the neighbour cell (i.e., *cellIndividualOffset* as defined within *measObjectNR* corresponding to the neighbour cell), and set to zero if not configured for the neighbour cell.
*Hys* is the hysteresis parameter for this event (i.e., *hysteresis* as defined within *reportConfigNR* for this event).
*Thresh1* is the threshold parameter for this event (i.e., *a5-Threshold1* as defined within *reportConfigNR* for this event).
*Thresh2* is the threshold parameter for this event (i.e., *a5-Threshold2* as defined within *reportConfigNR* for this event).
*Mn, Mp* are expressed in dBm in case of RSRP, or in dB in case of RSRQ and RS-SINR.
*Ofn, Ocn, Hys* are expressed in dB.
*Thresh1* is expressed in the same unit as *Mp.*
*Thresh2* is expressed in the same unit as *Mn.*
NOTE 2: The definition of Event A5 also applies to CondEvent A5.

5.5.4.8 Event B1 (Inter RAT neighbour becomes better than threshold)

The UE shall:

1> consider the entering condition for this event to be satisfied when condition B1-1, as specified below, is fulfilled;
1> consider the leaving condition for this event to be satisfied when condition B1-2, as specified below, is fulfilled.

$$\text{Inequality B1-1 (Entering condition)}$$

$$Mn + Ofn + Ocn - Hys > Thresh$$

$$\text{Inequality B1-2 (Leaving condition)}$$

$$Mn + Ofn + Ocn + Hys < Thresh$$

The variables in the formula are defined as follows:

*Mn* is the measurement result of the inter-RAT neighbour cell, not taking into account any offsets.

*Ofn* is the measurement object specific offset of the frequency of the inter-RAT neighbour cell (i.e., *eutra-Q-OffsetRange* as defined within the *measObjectEUTRA* corresponding to the frequency of the neighbour inter-RAT cell, *utra-FDD-Q-OffsetRange* as defined within the *measObjectUTRA-FDD* corresponding to the frequency of the neighbour inter-RAT cell).

*Ocn* is the cell specific offset of the inter-RAT neighbour cell (i.e., *cellIndividualOffset* as defined within the *measObjectEUTRA* corresponding to the neighbour inter-RAT cell), and set to zero if not configured for the neighbour cell.

*Hys* is the hysteresis parameter for this event (i.e., *hysteresis* as defined within *reportConfigInterRAT* for this event).

*Thresh* is the threshold parameter for this event (i.e., *b1-ThresholdEUTRA* as defined within *reportConfigInterRAT* for this event, *b1-ThresholdUTRA-FDD* as defined for UTRA-FDD within *reportConfigInterRAT* for this event).

*Mn* is expressed in dBm or in dB, depending on the measurement quantity of the inter-RAT neighbour cell.

*Ofn, Ocn, Hys* are expressed in dB.

*Thresh* is expressed in the same unit as *Mn.*

5.5.4.9 Event B2 (PCell becomes worse than threshold1 and inter RAT neighbour becomes better than threshold2)

The LTE shall:

1> consider the entering condition for this event to be satisfied when both condition B2-1 and condition B2-2, as specified below, are fulfilled;
1> consider the leaving condition for this event to be satisfied when condition B2-3 or condition B2-4, i.e., at least one of the two, as specified below, is fulfilled;

$$\text{Inequality B2-1 (Entering condition 1)}$$

$$Mp + Hys < Thresh1$$

$$\text{Inequality B2-2 (Entering condition 2)}$$

$$Mn + Ofn + Ocn - Hys > Thresh2$$

$$\text{Inequality B2-3 (Leaving condition 1)}$$

$$Mp - Hys > Thresh1$$

$$\text{Inequality B2-4 (Leaving condition 2)}$$

$$Mn + Ofn + Ocn + Hys < Thresh2$$

The variables in the formula are defined as follows:
*Mp* is the measurement result of the PCell, not taking into account any offsets.
*Mn* is the measurement result of the inter-RAT neighbour cell, not taking into account any offsets.
*Ofn* is the measurement object specific offset of the frequency of the inter-RAT neighbour cell (i.e., *eutra-Q-OffsetRange* as defined within the *measObjectEUTRA* corresponding to the frequency of the inter-RAT neighbour cell, *utra-FDD-Q-OffsetRange* as defined within the *measObjectUTRA-FDD* corresponding to the frequency of the neighbour inter-RAT cell).
*Ocn* is the cell specific offset of the inter-RAT neighbour cell (i.e., *cellIndividualOffset* as defined within the *measObjectEUTRA* corresponding to the neighbour inter-RAT cell), and set to zero if not configured for the neighbour cell.
*Hys* is the hysteresis parameter for this event (i.e., *hysteresis* as defined within *reportConfigInterRAT* for this event).
*Thresh1* is the threshold parameter for this event (i.e., b2-*Threshold1* as defined within *reportConfigInterRAT* for this event).
*Thresh2* is the threshold parameter for this event (i.e., *b2-Threshold2EUTRA* as defined within *reportConfigInterRAT* for this event, *b2-Threshold2UTRA-FDD* as defined for UTRA-FDD within *reportConfigInterRAT* for this event).
*Mp* is expressed in dBm in case of RSRP, or in dB in case of RSRQ and SINR.
*Mn* is expressed in dBm or dB, depending on the measurement quantity of the inter-RAT neighbour cell.
*Ofn, Ocn, Hys* are expressed in dB.
*Thresh1* is expressed in the same unit as *Mp.*
*Thresh2* is expressed in the same unit as *Mn.*
In operation 1e-20, the LTE may decide (identify or check) whether a measurement report should be triggered, based on the measurement configuration information received in operation 1e-15. Specifically, the LTE may decide (identify or check) that the measurement report is triggered when at least one of the following conditions is satisfied:

> 2> if the *reportType* is set to *eventTriggered* and if the corresponding *reportConfig* includes *numberOfTriggeringCells,* and if the entry condition applicable for this event, i.e., the event corresponding with the *eventId* of the corresponding *reportConfig* within *VarMeasConfig,* is fulfilled for one or more applicable cells for all measurements after layer 3 filtering taken during *timeToTrigger* defined for this event within the *VarMeasConfig*:
> 3> If the *VarMeasReportList* does not include a measurement reporting entry for this *measId* (a first cell triggers the event):
> 4> include a measurement reporting entry within the *VarMeasReportList* for this *measId*;
> 3> If the number of cell(s) in the *cellsTriggeredList* is larger than or equal to *numberOfTriggeringCells:*
> 4> include the concerned cell(s) in the *cellsTriggeredList* defined within the *VarMeasReportList* for this *measId*;
> 3> else:
> 4> include the concerned cell(s) in the *cellsTriggeredList* defined within the *VarMeasReportList* for this *measId*;
> 4> If the number of cell(s) in the *cellsTriggeredList* is larger than or equal to *numberOfTriggeringCells:*
> 5> set the *numberOfReportsSent* defined within the *VarMeasReportList* for this *measId* to 0;
> 5> initiate the measurement reporting procedure, as specified in 5.5.5;
> 2> if the *reportType* is set to *eventTriggered* and if the leaving condition applicable for this event is fulfilled for one or more of the cells included in the *cellsTriggeredList* defined within the *VarMeasReportList* for this *measId* for all measurements after layer 3 filtering taken during *timeToTrigger* defined within the *VarMeasConfig* for this event:
> 3> remove the concerned cell(s) in the *cellsTriggeredList* defined within the *VarMeasReportList* for this *measId*;
> 3> if *reportOnLeave* is set to *TRUE* for the corresponding reporting configuration or if *a6-ReportOnLeave* is set to *TRUE* or if *a4-a5-ReportOnLeave* is set to TRUE for the corresponding reporting configuration:
> 4> initiate the measurement reporting procedure, as specified in 5.5.5;
> 3> if the *cellsTriggeredList* defined within the *VarMeasReportList* for this *measId* is empty:
> 4> remove the measurement reporting entry within the *VarMeasReportList* for this *measId*;
> 4> stop the periodical reporting timer for this *measId,* if running;

In case that the UE decides (identifies or checks) that a measurement report is triggered in operation 1e-20, the UE may transmit the measurement report to the base station in operation 1e-25. A specific procedure for transmitting the measurement report to the base station by the UE may be as follows:
For the *measId* for which the measurement reporting procedure was triggered, the UE shall set the *measResults* within the *MeasurementReport* message as follows:

> 1> set the *measId* to the measurement identity that triggered the measurement reporting;
> 1> for each serving cell configured with *servingCellMO:*

2> if the *reportConfig* associated with the *measId* that triggered the measurement reporting includes *rsType:*

3> if the serving cell measurements based on the *rsType* included in the *reportConfig* that triggered the measurement report are available:

4> set the *measResultServingCell* within *measResultServingMOList* to include RSRP, RSRQ and the available SINR of the serving cell, derived based on the *rsType* included in the *reportConfig* that triggered the measurement report;

2> else:

3> if SSB based serving cell measurements are available:

4> set the *measResultServingCell* within *measResultServingMOList* to include RSRP, RSRQ and the available SINR of the serving cell, derived based on SSB;

3> else if CSI-RS based serving cell measurements are available:

4> set the *measResultServingCell* within *measResultServingMOList* to include RSRP, RSRQ and the available SINR of the serving cell, derived based on CSI-RS;

1> set the *servCellId* within *measResultServingMOList* to include each NR serving cell that is configured with *servingCellMO,* if any;

1> if the *reportConfig* associated with the *measId* that triggered the measurement reporting includes *reportQuantityRS-Indexes* and *maxNrofRS-IndexesToReport:*

2> for each serving cell configured with *servingCellMO,* include beam measurement information according to the associated *reportConfig* as described in 5.5.5.2;

1> if the *reportConfig* associated with the *measId* that triggered the measurement reporting includes *reportAddNeighMeas:*

2> for each *measObjectId* referenced in the *measIdList* which is also referenced with *servingCellMO,* other than the *measObjectId* corresponding with the *measId* that triggered the measurement reporting:

3> if the *measObjectNR* indicated by the *servingCellMO* includes the RS resource configuration corresponding to the *rsType* indicated in the *reportConfig:*

4> set the *measResultBestNeighCell* within *measResultServingMOList* to include the *physCellId* and the available measurement quantities based on the *reportQuantityCell* and *rsType* indicated in *reportConfig* of the non-serving cell corresponding to the concerned *measObjectNR* with the highest measured RSRP if RSRP measurement results are available for cells corresponding to this *measObjectNR,* otherwise with the highest measured RSRQ if RSRQ measurement results are available for cells corresponding to this *measObjectNR,* otherwise with the highest measured SINR;

4> if the *reportConfig* associated with the *measId* that triggered the measurement reporting includes *reportQuantityRS-Indexes* and *maxNrofRS-IndexesToReport:*

5> for each best non-serving cell included in the measurement report:

6> include beam measurement information according to the associated *reportConfig* as described in 5.5.5.2;

1> if the *reportConfig* associated with the *measId* that triggered the measurement reporting is set to *eventTriggered* and *eventID* is set to *eventA3,* or *eventA4,* or *eventA5,* or *eventB1,* or *eventB2:*

2> if the LTE is in NE-DC and the measurement configuration that triggered this measurement report is associated with the MCG:

3> set the *measResultServFreqListEUTRA-SCG* to include an entry for each E-UTRA SCG serving frequency with the following:

4> include *carrierFreq* of the E-UTRA serving frequency;

4> set the *measResultServingCell* to include the available measurement quantities that the LTE is configured to measure by the measurement configuration associated with the SCG;

4> if *reportConfig* associated with the *measId* that triggered the measurement reporting includes *reportAddNeighMeas:*

5> set the *measResultServFreqListEUTRA-SCG* to include within *measResultBestNeighCell* the quantities of the best non-serving cell, based on RSRP, on the concerned serving frequency;

1> if *reportConfig* associated with the *measId* that triggered the measurement reporting is set to *eventTriggered* and *eventID* is set to *eventA3,* or *eventA4,* or *eventA5:*

2> if the LTE is in NR-DC and the measurement configuration that triggered this measurement report is associated with the MCG:

3> set the *measResultServFreqListNR-SCG* to include for each NR SCG serving cell that is configured with *servingCellMO,* if any, the following:

4> if the *reportConfig* associated with the *measId* that triggered the measurement reporting includes *rsType:*

5> if the serving cell measurements based on the *rsType* included in the *reportConfig* that triggered the measurement report are available according to the measurement configuration associated with the SCG:

6> set the *measResultServingCell* within *measResultServFreqListNR-SCG* to include RSRP, RSRQ and the available SINR of the serving cell, derived based on the *rsType* included in the *reportConfig* that triggered the measurement report;

4> else:

5> if SSB based serving cell measurements are available according to the measurement configuration associated with the SCG:

6> set the *measResultServingCell* within *measResultServFreqListNR-SCG* to include RSRP, RSRQ and the available SINR of the serving cell, derived based on SSB;

5> else if CSI-RS based serving cell measurements are available according to the measurement configuration associated with the SCG:

6> set the *measResultServingCell* within *measResultServFreqListNR-SCG* to include RSRP, RSRQ and the available SINR of the serving cell, derived based on CSI-RS;

4> if results for the serving cell derived based on SSB are included:

5> include the *ssbFrequency* to the value indicated by ssbFrequency as included in the *MeasObjectNR* of the serving cell;

4> if results for the serving cell derived based on CSI-RS are included:

5> include the *refFreqCSI-RS* to the value indicated by *refFreqCSI-RS* as included in the *MeasObjectNR* of the serving cell;

4> if the *reportConfig* associated with the *measId* that triggered the measurement reporting includes *reportQuantityRS-Indexes* and *maxNrofRS-IndexesToReport*:

5> for each serving cell configured with *servingCellMO,* include beam measurement information according to the associated *reportConfig* as described in 5.5.5.2, where availability is considered according to the measurement configuration associated with the SCG;

4> if *reportConfig* associated with the *measId* that triggered the measurement reporting includes *reportAddNeighMeas:*

5> if the *measObjectNR* indicated by the *servingCellMO* includes the RS resource configuration corresponding to the *rsType* indicated in the *reportConfig:*

6> set the *measResultBestNeighCellListNR* within *measResultServFreqListNR-SCG* to include one entry with the *physCellId* and the available measurement quantities based on the *reportQuantityCell* and *rsType* indicated in *reportConfig* of the non-serving cell corresponding to the concerned *measObjectNR* with the highest measured RSRP if RSRP measurement results are available for cells corresponding to this *measObjectNR,* otherwise with the highest measured RSRQ if RSRQ measurement results are available for cells corresponding to this *measObjectNR,* otherwise with the highest measured SINR, where availability is considered according to the measurement configuration associated with the SCG;

7> if the *reportConfig* associated with the *measId* that triggered the measurement reporting includes *reportQuantityRS-Indexes* and *maxNrofRS-IndexesToReport:*

8> for each best non-serving cell included in the measurement report:

9> include beam measurement information according to the associated *reportConfig* as described in 5.5.5.2, where availability is considered according to the measurement configuration associated with the SCG;

1> if the *measRSSI-ReportConfig* is configured within the corresponding *reportConfig* for this *measId*:

2> set the *rssi-Result* to the linear average of sample value(s) provided by lower layers in the *reportInterval;*

2> set the *channelOccupancy* to the rounded percentage of sample values which are beyond the *channelOccupancyThreshold* within all the sample values in the *reportInterval;*

1> if the UE is acting as L2 U2N Remote UE:

2> set the *sl-MeasResultServingRelay* to include the SL-RSRP of the serving L2 U2N Relay UE;

NOTE 1: In case of no data transmission from L2 U2N Relay UE to L2 U2N Remote UE, it is left to UE implementation whether to use SL-RSRP or SD-RSRP when setting the *sl-MeasResultServingRelay* of the serving L2 U2N Relay UE.

1> if there is at least one applicable neighbouring cell or candidate L2 U2N Relay LTE to report:

2> if the *reportType* is set to *eventTriggered* or *periodical.*

3> if the measurement report concerns the candidate L2 U2N Relay UE:

4> set the *sl-MeasResultsCandRelay* in *measResultNeighCells* to include the best candidate L2 U2N Relay LTEs up to *maxReportCells* in accordance with the following:

5> if the *reportType* is set to *eventTriggered:*

6> include the L2 U2N Relay UEs included in the *relaysTriggeredList* as defined within the *VarMeasReportList* for this *measId*;

5> else:

6> include the applicable L2 U2N Relay LTEs for which the new measurement results became available since the last periodical reporting or since the measurement was initiated or reset;

5> for each L2 U2N Relay UE that is included in the *sl-MeasResultsCandRelay:*

6> include the *sl-RelayUE-Identity;*

5> for each included L2 U2N Relay UE, include the layer 3 filtered measured results in accordance with the *report-Config* for this *measId,* ordered as follows:

6> set the *sl-MeasResult* to include the quantity(ies) indicated in the *reportQuantityRelay* within the concerned *reportConfigRelay* in decreasing order of the sorting quantity, determined as specified in 5.5.5.3, i.e., the best L2 U2N Relay UE is included first;

3> else:

4> set the *measResultNeighCells* to include the best neighbouring cells up to *maxReportCells* in accordance with the following:

5> if the *reportType* is set to *eventTriggered* and *eventId* is not set to *eventD1:*

6> include the cells included in the *cellsTriggeredList* as defined within the *VarMeasReportList* for this *measId;*

5> else:

6> include the applicable cells for which the new measurement results became available since the last periodical reporting or since the measurement was initiated or reset;

5> for each cell that is included in the *measResultNeighCells,* include the *physCellId;*

5> if the reportType is set to eventTriggered or periodical:

6> for each included cell, include the layer 3 filtered measured results in accordance with the *reportConfig* for this *measId,* ordered as follows:

7> if the *measObject* associated with this *measId* concerns NR:

8> if *rsType* in the associated *reportConfig* is set to *ssb:*

9> set *resultsSSB-Cell* within the *measResult* to include the SS/PBCH block based quantity(ies) indicated in the *reportQuantityCell* within the concerned *reportConfig,* in decreasing order of the sorting quantity, determined as specified in 5.5.5.3, i.e., the best cell is included first;

9> if *reportQuantityRS-Indexes* and *maxNrofRS-IndexesToReport* are configured, include beam measurement information as described in 5.5.5.2;

8> else if *rsType* in the associated *reportConfig* is set to *csi-rs:*

9> set *resultsCSI-RS-Cell* within the *measResult* to include the CSI-RS based quantity(ies) indicated in the *reportQuantityCell* within the concerned *reportConfig,* in decreasing order of the sorting quantity, determined as specified in 5.5.5.3, i.e., the best cell is included first;

9> if *reportQuantityRS-Indexes* and *maxNrojRS-IndexesToReport* are configured, include beam measurement information as described in 5.5.5.2;

7> if the *measObject* associated with this *measId* concerns E-UTRA:

8> set the *measResult* to include the quantity(ies) indicated in the *reportQuantity* within the concerned *reportConfigInterRAT* in decreasing order of the sorting quantity, determined as specified in 5.5.5.3, i.e., the best cell is included first;

7> if the *measObject* associated with this *measId* concerns UTRA-FDD and if *ReportConfigInterRAT* includes the *reportQuantityUTRA-FDD:*

8> set the *measResult* to include the quantity(ies) indicated in the *reportQuantityUTRA-FDD* within the concerned *reportConfigInterRAT* in decreasing order of the sorting quantity, determined as specified in 5.5.5.3, i.e., the best cell is included first;

2> else:

3> if the cell indicated by *cellForWhichToReportCGI* is an NR cell:

4> if *plmn-IdentityInfoList* of the *cgi-Info* for the concerned cell has been obtained:

5> include the *plmn-IdentityInfoList* including *plmn-IdentityList, trackingAreaCode* (if available), *trackingAreaList* (if available), *ranac* (if available), *cellIdentity* and *cellReservedForOperatorUse* for each entry of the *plmn-IdentityInfoList;*

5> include *frequencyBandList* if available;

5> for each *PLMN-IdentityInfo* in *plmn-IdentityInfoList:*

6> if the *gNB-ID-Length* is broadcast:

7> include *gNB-ID-Length;*

4> if *nr-CGI-Reporting-NPN* is supported by the UE and *npn-IdentityInfoList* of the *cgi-Info* for the concerned cell has been obtained:

5> include the *npn-IdentityInfoList* including *npn-IdentityList, trackingAreaCode, ranac* (if available), *cellIdentity* and *cellReservedForOperatorUse* for each entry of the *npn-IdentityInfoList;*

5> for each *NPN-IdentityInfo* in *NPN-IdentityInfoList:*

6> if the *gNB-ID-Length* is broadcast:

7> include *gNB-ID-Length;*

5> include *cellReservedForOtherUse* if available;

4> else if *MIB* indicates the *SIB1* is not broadcast:

5> include the *noSIB1* including the *ssb-SubcarrierOffset* and *pdcch-ConfigSIB1* obtained from *MIB* of the concerned cell;

3> if the cell indicated by *cellForWhichToReportCGI* is an E-UTRA cell:

4> if all mandatory fields of the *cgi-Info-EPC* for the concerned cell have been obtained:

5> include in the *cgi-Info-EPC* the fields broadcasted in E-UTRA *SystemInformationBlockType1* associated to EPC;

4> if the UE is E-UTRA/5GC capable and all mandatory fields of the *cgi-Info-5GC* for the concerned cell have been obtained:

5> include in the *cgi-Info-5GC* the fields broadcasted in E-UTRA *SystemInformationBlockType1* associated to 5GC;

4> if the mandatory present fields of the *cgi-Info* for the cell indicated by the *cellForWhichToReportCGI* in the associated *measObject* have been obtained:

5> include the *freqBandIndicator;*

5> if the cell broadcasts the *multiBandInfoList,* include the *multiBandInfoList;*

5> if the cell broadcasts the *freqBandIndicatorPriority,* include the *freqBandIndicatorPriority;*

1> if the corresponding *measObject* concerns NR:

2> if the *reportSFTD-Meas* is set to *true* within the corresponding *reportConfigNR* for this *measId:*

3> set the *measResultSFTD-NR* in accordance with the following:

4> set *sfn-OffsetResult* and *frameBoundaryOffsetResult* to the measurement results provided by lower layers;

4> if the *reportRSRP* is set to *true;*

5> set *rsrp-Result* to the RSRP of the NR PSCell derived based on SSB;

2> else if the *reportSFTD-NeighMeas* is included within the corresponding *reportConfigNR* for this *measId*:

3> for each applicable cell which measurement results are available, include an entry in the *measResultCellListSFTD-NR* and set the contents as follows:

4> set *physCellId* to the physical cell identity of the concerned NR neighbour cell.

4> set *sfn-OffsetResult* and *frameBoundaryOffsetResult* to the measurement results provided by lower layers;

4> if the *reportRSRP* is set to *true:*

5> set *rsrp-Result* to the RSRP of the concerned cell derived based on SSB;

1> else if the corresponding *measObject* concerns E-UTRA:

2> if the *reportSFTD-Meas* is set to *true* within the corresponding *reportConfigInterRAT* for this *measId*:

3> set the *measResultSFTD-EUTRA* in accordance with the following:

4> set *sfn-OffsetResult* and *frameBoundaryOffsetResult* to the measurement results provided by lower layers;

4> if the *reportRSRP* is set to *true;*

5> set *rsrpResult-EUTRA* to the RSRP of the EUTRA PSCell;

1> if average uplink PDCP delay values are available:

2> set the *ul-PDCP-DelayValueResultList* to include the corresponding average uplink PDCP delay values;

1> if PDCP excess delay measurements are available:

2> set the *ul-PDCP-ExcessDelayResultList* to include the corresponding PDCP excess delay measurements;

1> if the *includeCommonLocationInfo* is configured in the corresponding *reportConfig* for this *measId* and detailed location information that has not been reported is available, set the content of *commonLocationInfo* of the *locationInfo* as follows:

2> include the *locationTimestamp*;

2> include the *locationCoordinate,* if available;

2> include the *velocityEstimate,* if available;

2> include the *locationError,* if available;

2> include the *locationSource,* if available;

2> if available, include the *gnss-TOD-msec,*

1> if the *coarseLocationRequest* is set to *true* in the corresponding *reportConfig* for this *measId*:

2> if available, include *coarseLocationInfo;*

1> if the *include WLAN-Meas* is configured in the corresponding *reportConfig* for this *measId,* set the *wlan-LocationInfo* of the *locationInfo* in the *measResults* as follows:

2> if available, include the *LogMeasResultWLAN,* in order of decreasing RSSI for WLAN APs;

1> if the *includeBT-Meas* is configured in the corresponding *reportConfig* for this *measId,* set the *BT-LocationInfo* of the *locationInfo* in the *measResults* as follows:

2> if available, include the *LogMeasResultBT,* in order of decreasing RSSI for Bluetooth beacons;

1> if the *includeSensorMeas* is configured in the corresponding *reportConfig* for this *measId,* set the *sensor-Loca-*

*tionInfo* of the *locationInfo* in the *measResults* as follows:

2> if available, include the *sensor-MeasurementInformation;*

2> if available, include the *sensor-MotionInformation;*

1> if there is at least one applicable transmission resource pool for NR sidelink communication (for *measResultsSL*):

2> set the *measResultsListSL* to include the CBR measurement results in accordance with the following:

3> if the *reportType* is set to *eventTriggered:*

4> include the transmission resource pools included in the *poolsTriggeredList* as defined within the *VarMeasReportList* for this *measId;*

3> else:

4> include the applicable transmission resource pools for which the new measurement results became available since the last periodical reporting or since the measurement was initiated or reset;

3> if the corresponding *measObject* concerns NR sidelink communication, then for each transmission resource pool to be reported:

4> set the *sl-poolReportIdentity* to the identity of this transmission resource pool;

4> set the *sl-CBR-ResultsNR* to the CBR measurement results on PSSCH and PSCCH of this transmission resource pool provided by lower layers, if available;

NOTE 1: Void.

1> if there is at least one applicable CLI measurement resource to report:

2> if the *reportType* is set to *cli-EventTriggered* or *cli-Periodical*:

3> set the *measResultCLI* to include the most interfering SRS resources or most interfering CLI-RSSI resources up to *maxReportCLI* in accordance with the following:

4> if the *reportType* is set to *cli-EventTriggered:*

5> if trigger quantity is set to *srs-RSRP* i.e., *il-Threshold* is set to *srs-RSRP:*

6> include the SRS resource included in the *cli-TriggeredList* as defined within the *VarMeasReportList* for this *measId;*

5> if trigger quantity is set to *cli-RSSI* i.e., *il-Threshold* is set to *cli-RSSI:*

6> include the CLI-RSSI resource included in the *cli-TriggeredList* as defined within the *VarMeasReportList* for this *measId;*

4> else:

5> if *reportQuantityCLI* is set to *srs-rsrp*:

6> include the applicable SRS resources for which the new measurement results became available since the last periodical reporting or since the measurement was initiated or reset;

5> else:

6> include the applicable CLI-RSSI resources for which the new measurement results became available since the last periodical reporting or since the measurement was initiated or reset;

4> for each SRS resource that is included in the *measResultCLI*:

5> include the *srs-ResourceId;*

5> set *srs-RSRP-Result* to include the layer 3 filtered measured results in decreasing order, i.e., the most interfering SRS resource is included first;

4> for each CLI-RSSI resource that is included in the *measResultCLI:*

5> include the *rssi-ResourceId;*

5> set *cli-RSSI-Result* to include the layer 3 filtered measured results in decreasing order, i.e., the most interfering CLI-RSSI resource is included first;

1> if there is at least one applicable LTE Rx-Tx time difference measurement to report:

2> set *measResultRxTxTimeDiff* to the latest measurement result;

1> increment the *numberOfReportsSent* as defined within the *VarMeasReportList* for this *measId* by 1;

1> stop the periodical reporting timer, if running;

1> if the *numberOfReportsSent* as defined within the *VarMeasReportList* for this *measId* is less than the *reportAmount* as defined within the corresponding *reportConfig* for this *measId*:

2> start the periodical reporting timer with the value of *reportInterval* as defined within the corresponding *reportConfig* for this *measId;*

1> else:

2> if the *reportType* is set to *periodical* or *cli-Periodical* or *rxTxPeriodical:*

3> remove the entry within the *VarMeasReportList* for this *measId;*

3> remove this *measId* from the *measIdList* within *VarMeasConfig;*

1> if the measurement reporting was configured by a *sl-ConfigDedicatedNR* received within the *RRCConnectionReconfiguration:*

2> submit the *MeasurementReport* message to lower layers for transmission via SRB1, embedded in E-UTRA RRC message *ULInformationTransferIRAT* as specified TS 36.331 [10], clause 5.6.28;
1> else if the LTE is in (NG)EN-DC:
2> if SRB3 is configured and the SCG is not deactivated:
3> submit the *MeasurementReport* message via SRB3 to lower layers for transmission, upon which the procedure ends;
2> else:
3> submit the *MeasurementReport* message via E-UTRA embedded in E-UTRA RRC message *ULInformation-TransferMRDC* as specified in TS 36.331 [10].
1> else if the LTE is in NR-DC:
2> if the measurement configuration that triggered this measurement report is associated with the SCG:
3> if SRB3 is configured and the SCG is not deactivated:
4> submit the *MeasurementReport* message via SRB3 to lower layers for transmission, upon which the procedure ends;
3> else:
4> submit the *MeasurementReport* message via SRB1 embedded in NR RRC message *ULInformationTransferMRDC* as specified in 5.7.2a.3;
2> else:
3> submit the *MeasurementReport* message via SRB1 to lower layers for transmission, upon which the procedure ends;
1> else:
2> submit the *MeasurementReport* message to lower layers for transmission, upon which the procedure ends.

FIG. 1F is a flow diagram illustrating a process in which a handover fails when a UAV LTE transmits a measurement report to a base station in a mobile communication system, according to an embodiment.

Referring to FIG. 1F, a UAV LTE 1f-01 may be in an RRC connected mode (RRC_CONNECTED) by establishing an RRC connection with an NR base station 1f-02.

In operation 1f-10, the LTE may transmit a LTE capability information message (LTECapabilityInformation) to the base station. Transmission of the UE capability information message (LTECapabilityInformation) may follow an above-described embodiment (e.g., FIG. 1E).

In operation 1f-15, the base station may transmit a predetermined RRC message (e.g., RRCResume or RRCReconfiguration) including measurement configuration information (MeasConfig) to the LTE. The predetermined RRC message (e.g., RRCResume or RRCReconfiguration) may follow an above-described embodiment (e.g., FIG. 1E).For convenience of explanation, the base station may configure numberOfTriggeringCells to be 3, and configure eventTriggered to be EventA3.

In operation 1f-20, the UE may decide (identify or check) whether a measurement report should be triggered, based on the measurement configuration information received in operation 1f-15. Specifically, the LTE may decide (identify, or check) whether the following conditions are satisfied.

2> if the *reportType* is set to *eventTriggered* and if the corresponding *reportConfig* includes *numberOfTriggeringCells,* and if the entry condition applicable for this event, i.e., the event corresponding with the *eventId* of the corresponding *reportConfig* within *VarMeasConfig,* is fulfilled for one or more applicable cells for all measurements after layer 3 filtering taken during *timeToTrigger* defined for this event within the *VarMeasConfig*:
3> If the *VarMeasReportList* does not include a measurement reporting entry for this *measId* (a first cell triggers the event):
4> include a measurement reporting entry within the *VarMeasReportList* for this *measId*;
3> If the number of cell(s) in the *cellsTriggeredList* is larger than or equal to *numberOfTriggeringCells:*
4> include the concerned cell(s) in the *cellsTriggeredList* defined within the *VarMeasReportList* for this *measId*;
3> else:
4> include the concerned cell(s) in the *cellsTriggeredList* defined within the *VarMeasReportList* for this *measId*;
4> If the number of cell(s) in the *cellsTriggeredList* is larger than or equal to *numberOfTriggeringCells:*
5> set the *numberOfReportsSent* defined within the *VarMeasReportList* for this *measId* to 0;
5> initiate the measurement reporting procedure, as specified in 5.5.5;

The UE may include cell 1, cell 2, and/or cell 3 in the cellTriggeredCellList when cell 1, cell 2, and/or cell 3 satisfy the entry condition for EventA3. The LTE may initiate a measurement reporting procedure when the number of cells included in cellTriggeredCellList is larger than or equal to numberOfTriggeringCells.

In operation 1f-25, the UE may transmit a measurement report to the base station according to an above-described embodiment (e.g., FIG. 1E).

In operation 1f-30, the UE may decide (identify or check) whether a measurement report should be triggered, based on the measurement configuration information received in operation 1f-15. That is, the UE may include cell 1, cell 2, cell 3, and/or cell 4 in the cellTriggeredCellList when cell 1, cell 2, cell 3, and/or cell 4 satisfy the entry condition for EventA3. However, the UE may not initiate a measurement reporting procedure. That is, the UE has a feature of not initiating the measurement reporting procedure when the following conditions are satisfied:

Once such condition is met and a measurement report is sent, the list of triggered cells is updated when subsequent cell(s) fulfil the event, however further measurement reports are not sent while the list of triggered cells remains larger than or equal to the configured number of cells.

In operation 1f-35, the UE may decide (identify or check) whether a measurement report should be triggered, based on the measurement configuration information received in operation 1f-15. Specifically, the UE may include cell 2, cell 3, and cell 4 in cellTriggeredCellList because cell 2, cell 3, and cell 4 satisfy the entry condition for EventA3. As described above, the UE may not transmit the measurement report to the base station again. For example, cell 1 may be released from cellTriggeredCellList by satisfying the following leaving condition of EventA3. In this case, if reportOn-Leave is not configured to be TRUE, the UE may not transmit the measurement report to the base station.

> 2> if the *reportType* is set to *eventTriggered* and if the leaving condition applicable for this event is fulfilled for one or more of the cells included in the *cellsTriggeredList* defined within the *VarMeasReportList* for this *measId* for all measurements after layer 3 filtering taken during *timeToTrigger* defined within the *VarMeasConfig* for this event:
> 3> remove the concerned cell(s) in the *cellsTriggeredList* defined within the *VarMeasReportList* for this *measId*;
> 3> if *reportOnLeave* is set to *TRUE* for the corresponding reporting configuration or if *a6-ReportOnLeave* is set to *TRUE* or if *a4-a5-ReportOnLeave* is set to TRUE for the corresponding reporting configuration:
> 4> initiate the measurement reporting procedure, as specified in 5.5.5;
> 3> if the *cellsTriggeredList* defined within the *VarMeasReportList* for this *measId* is empty:
> 4> remove the measurement reporting entry within the *VarMeasReportList* for this *measId*;
> 4> stop the periodical reporting timer for this *measId,* if running;

In operation 1f-40, the base station may transmit a predetermined RRC message (RRCReconfiguration) for instructing the UE to hand over to cell 1.

In operation 1f-45, the UE may fail a handover with cell 1 and perform an RRC connection re-establishment procedure with the base station. The reason why the UE fails in handover with cell 1 may be as follows:

In operation 1f-25, the UE has transmitted, to the base station, a measurement report indicating that cell 1 is a cell which satisfies EventA3, but in operation 1f-35, the UE did not notify the base station that cell 1 is no longer a cell which satisfies EventA3.

FIG. 1G is a flow diagram illustrating of a process in which a UAV UE efficiently transmits a measurement report to a base station in a mobile communication system, according to an embodiment.

Referring to FIG. 1G, a UAV UE 1g-01 may be in an RRC connected mode (RRC_CONNECTED) by establishing an RRC connection with an NR base station 1g-02.

In operation 1g-10, the LTE may transmit a LTE capability information message (LTECapabilityInformation) to the base station. A method of transmitting the LTE capability information message (LTECapabilityInformation) may follow an above-described embodiment (e.g., FIG. 1E or FIG. 1F).

In operation 1g-15, the base station may transmit a predetermined RRC message (e.g., RRCResume or RRCReconfiguration) including measurement configuration information (MeasConfig) to the UE. A method of transmitting the predetermined RRC message (e.g., RRCResume or RRCReconfiguration) may follow an above-described embodiment (e.g., FIG. 1F or 1f). For convenience of explanation, the base station may configure numberOfTriggeringCells to be 3, and may configure eventTriggered to be EventA3 (e.g., one of EventA4, EventA5, EventB1, and EventB2, or may be configured as another event to which numberOfTriggeringCells is applied).

In operation 1g-20, the UE may decide whether a measurement report should be triggered, based on the measurement configuration information received in operation 1g-15. Specifically, the LTE may decide (identify, or check) whether the following conditions are satisfied:

> 2> if the *reportType* is set to *eventTriggered* and if the corresponding *reportConfig* includes *numberOfTriggeringCells,* and if the entry condition applicable for this event, i.e., the event corresponding with the *eventId* of the corresponding *reportConfig* within *VarMeasConfig,* is fulfilled for one or more applicable cells for all measurements after layer 3 filtering taken during *timeToTrigger* defined for this event within the *VarMeasConfig*:
> 3> If the *VarMeasReportList* does not include a measurement reporting entry for this *measId* (a first cell triggers the event):
> 4> include a measurement reporting entry within the *VarMeasReportList* for this *measId*;

> 3> If the number of cell(s) in the *cellsTriggeredList* is larger than or equal to *numberOfTriggeringCells:*
>> 4> include the concerned cell(s) in the *cellsTriggeredList* defined within the *VarMeasReportList* for this *measId;*
> 3> else:
>> 4> include the concerned cell(s) in the *cellsTriggeredList* defined within the *VarMeasReportList* for this *measId;*
>> 4> If the number of cell(s) in the *cellsTriggeredList* is larger than or equal to *numberOfTriggeringCells:*
>>> 5> set the *numberOfReportsSent* defined within the *VarMeasReportList* for this *measId* to 0;
>>> 5> initiate the measurement reporting procedure, as specified in 5.5.5;

The UE may include cell 1, cell 2, and/or cell 3 in cellTriggeredList when cell 1, cell 2, and/or cell 3 satisfy the entry condition for EventA3. When the number of cells included in cellTriggeredList is larger than or equal to numberOfTriggeringCells, the UE may initiate a measurement reporting procedure.

In operation 1g-25, the UE may transmit a measurement report to the base station according to an above-described embodiment (e.g., FIG. 1E or 1F).

In operation 1g-30, the UE may decide (identify or check) whether a measurement report should be triggered, based on the measurement configuration information received in operation 1g-15. That is, when cell 1, cell 2, cell 3, and/or cell 4 satisfy the entry condition for EventA3, the UE may include cell 1, cell 2, cell 3, and/or cell 4 in the cellTriggeredCellList. However, the UE may have a feature of not transmitting a measurement report to the base station. That is, the UE may not transmit the measurement report to the base station again when the following conditions are satisfied:

Once such condition is met and a measurement report is sent, the list of triggered cells is updated when subsequent cell(s) fulfil the event, however further measurement reports are not sent while the list of triggered cells remains larger than or equal to the configured number of cells.

In operation 1g-35, the LTE may decide (identify or check) whether a measurement report should be triggered, based on the measurement configuration information received in operation 1g-15. Specifically, when cell 1, cell 2, cell 3, and/or cell 4 satisfy the entry condition for EventA3, the UE may include cell 1, cell 2, cell 3, and/or cell 4 in cellTriggeredCellList. Herein, when the number of cells included in cellTriggeredList is larger than or equal to numberOfTriggeringCells and at least one of the cells included in cellTriggeredList derived in operation 1g-25 is excluded from the current cellTriggeredList, the UE transmits a measurement report to the base station. At this time, regardless of whether reportOnLeave is configured as TRUE, the UE may transmit a measurement report to the base station.

In operation 1g-45, the base station may transmit a predetermined RRC message (RRCReconfiguration) for instructing the UE to perform a handover to cell 2. In addition, the UE may successfully perform a handover with cell 2, and transmit and/or receive data to and/or from cell 2.

Herein, in case that at least one of the cells, which continuously satisfy the entry condition for the event including NumberOfTriggeringCells and are included in the previous cellTriggeredList for which the UE has triggered a measurement report, is excluded from the current cellTriggeredList, the UE may transmit the measurement report to the base station. This allows the base station to resolve the issue of the UE handing over to the wrong cell.

FIG. 1H is a flow diagram illustrating a process in which a UAV UE efficiently transmits a measurement report to a base station in a mobile communication system, according to an embodiment.

Referring to FIG. 1H, a UAV UE 1h-01 may be in an RRC connected mode (RRC_CONNECTED) by establishing an RRC connection with an NR base station 1h-02.

In operation 1h-10, the UE may transmit a UE capability information message (UECapabilityInformation) to the base station. A method of transmitting the UE capability information message (UECapabilityInformation) may follow an above-described embodiment (e.g., any one of FIGS. 1E to 1G). Additionally, the following parameter may be included in the message.

Whether a prohibit timer is supported or not: indicates that the UE is capable of performing a measurement report initiation procedure only in case that the prohibit timer is not running when the following 4> condition is satisfied. Alternatively, whether a prohibit timer is supported or not indicates that the UE is capable of performing a measurement report initiation procedure only in case that the cell list included in the current cellTriggeredList is different from the cells included in the cellTriggeredList for which a measurement report is most recently triggered (e.g., for the same event) and the prohibit timer is not running, even if the condition 4> below is satisfied. However, under specific conditions (e.g., when a specific event condition is satisfied or when the number of cells simultaneously satisfying a specific event condition is larger than or equal to a predetermined threshold value), the UE may transmit a measurement report even if the prohibit timer is running (e.g., under specific conditions, the transmission of a measurement report may be triggered regardless of whether the prohibit timer is running. Alternatively, under specific conditions, the UE may consider (identify, or determine) that the prohibition timer is not running. When the UE supports a prohibit timer, the UE may operate according to one of operations described in the following stages. However, the operation of the LTE is not limited to the above-described operation methods, and may further include an additional operation considering the prohibit timer.

2> if the *reportType* is set to *eventTriggered* and if the corresponding *reportConfig* includes *numberOfTriggeringCells*, and if the entry condition applicable for this event, i.e., the event corresponding with the *eventId* of the corresponding *reportConfig* within *VarMeasConfig,* is fulfilled for one or more applicable cells for all measurements after layer 3 filtering taken during *timeToTrigger* defined for this event within the *VarMeasConfig*:

3> If the *VarMeasReportList* does not include a measurement reporting entry for this *measId* (a first cell triggers the event):

4> include a measurement reporting entry within the *VarMeasReportList* for this *measId*;

3> If the number of cell(s) in the *cellsTriggeredList* is larger than or equal to *numberOfTriggeringCells:*

4> include the concerned cell(s) in the *cellsTriggeredList* defined within the *VarMeasReportList* for this *measId*;

3> else:

4> include the concerned cell(s) in the *cellsTriggeredList* defined within the *VarMeasReportList* for this *measId*;

4> If the number of cell(s) in the cellsTriggeredList is larger than or equal to numberOfTriggeringCells:

5> set the *numberOfReportsSent* defined within the *VarMeasReportList* for this *measId* to 0;

5> initiate the measurement reporting procedure, as specified in 5.5.5;

In operation 1h-15, the base station may transmit a predetermined RRC message (e.g., RRCResume or RRCReconfiguration) including measurement configuration information (MeasConfig) to the LTE. A method of transmitting the predetermined RRC message (e.g., RRCResume or RRCReconfiguration) may follow an above-described embodiment (e.g., any one of FIGS. 1E to 1G). For convenience of explanation, the base station may configure numberOfTriggeringCells to be 3, and may configure eventTriggered to be EventA3 (e.g., one of EventA4, EventA5, EventB1, and EventB2, or may be configured as another event to which numberOfTriggeringCells is applied). Herein, a value of the prohibit timer described in operation 1h-10 may be included in the measurement configuration information. The prohibit timer value may be configured to be a value less than or equal to reportInterval. Alternatively, the prohibit timer value may be configured to be a value scaled to reportInterval or configured to be a value of x to be scaled (e.g., 0.2). In case that a value to be scaled is configured, the LTE may configure the prohibit timer value to be x *reportInterval. In case that the prohibit timer value is not configured, the LTE may operate as in an above-described embodiment (e.g., any one of FIGS. 1E to 1G), or may decide (identify or check) that the prohibit timer value is configured as a default value. Alternatively, transmission of the measurement report may be triggered under a specific condition (e.g., when a specific event condition is satisfied or when the number of cells simultaneously satisfying a specific event condition is larger than or equal to a predetermined threshold value) regardless of whether the prohibit timer is running. Alternatively, under a specific condition, the UE may consider (identify or determine) that the prohibit timer is not running.

In operation 1h-20, the LTE may decide (identify or check) whether a measurement report should be triggered, based on the measurement configuration information received in operation 1h-15. Specifically, the LTE may decide (identify, or check) whether the following conditions are satisfied:

2> if the *reportType* is set to *eventTriggered* and if the corresponding *reportConfig* includes *numberOfTriggeringCells,* and if the entry condition applicable for this event, i.e., the event corresponding with the *eventId* of the corresponding *reportConfig* within *VarMeasConfig,* is fulfilled for one or more applicable cells for all measurements after layer 3 filtering taken during *timeToTrigger* defined for this event within the *VarMeasConfig*:

3> If the *VarMeasReportList* does not include a measurement reporting entry for this *measId* (a first cell triggers the event):

4> include a measurement reporting entry within the *VarMeasReportList* for this *measId*;

3> If the number of cell(s) in the *cellsTriggeredList* is larger than or equal to *numberOfTriggeringCells:*

4> include the concerned cell(s) in the *cellsTriggeredList* defined within the *VarMeasReportList* for this *measId*;

3> else:

4> include the concerned cell(s) in the *cellsTriggeredList* defined within the *VarMeasReportList* for this *measId*;

4> If the number of cell(s) in the *cellsTriggeredList* is larger than or equal to *numberOfTriggeringCells:*

5> set the *numberOfReportsSent* defined within the *VarMeasReportList* for this *measId* to 0;

5> initiate the measurement reporting procedure, as specified in 5.5.5;

The UE may include cell 1, cell 2, and/or cell 3 in cellTriggeredCellList when cell 1, cell 2, and/or cell 3 satisfy the entry condition for EventA3. When the number of cells included in cellTriggeredCellList is larger than or equal to numberOfTriggeringCells, the LTE may initiate a measurement reporting procedure according to an above-described embodiment (e.g., any one of FIGS. 1E to 1G). At this time, the prohibit timer may be run in operation 1h-10.

In operation 1h-25, the UE may transmit a measurement report to the base station. A measurement report transmission method may follow an above-described embodiment (e.g., any one of FIGS. 1E to 1G).

In operation 1h-30, the UE may decide (identify or check) whether a measurement report should be triggered, based on the measurement configuration information received in operation 1h-15. That is, when cell 1, cell 2, cell 3, and/or cell 4 satisfy the entry condition for EventA3, the UE may include cell 1, cell 2, cell 3, and/or cell 4 in the cellTriggeredCellList. Herein, when the prohibit timer is running, the UE may not transmit the measurement report to the base station. However, under a specific condition (e.g., when a specific event condition is satisfied or when the number of cells simultaneously satisfying a specific event condition is larger than or equal to a predetermined threshold value), the UE may transmit the measurement report even if the prohibit timer is running. For example, under specific conditions, transmission of a measurement report may be triggered regardless of whether a prohibit timer is running. Alternatively, under a specific condition, the UE may consider (identify or determine) that the prohibit timer is not running and transmit a measurement report to the base station.

In operation 1h-35, the UE may decide (identify or check) whether a measurement report should be triggered, based on the measurement configuration information received in operation 1h-15. That is, the UE may include cell 1, cell 2, cell 3, and/or cell 4 in the cellTriggeredCellList when cell 1, cell 2, cell 3, and/or cell 4 satisfy the entry condition for EventA3. If the prohibit timer is not running, a measurement report start procedure may be performed. That is, in case that, while the prohibit timer is not running, the cell list included in the cellTriggeredList, for which the measurement report initiation procedure is previously triggered, is different from the cell list included in the current cellTriggeredList, and the entry condition for EventA3 is satisfied, the UE may trigger the measurement report initiation procedure. The UE may run the prohibit timer.

In operation 1h-40, the UE may transmit a measurement report to the base station.

Herein, when the entry condition for the event including numberOfTriggeringCells are satisfied, the UE may initiate a measurement reporting procedure and transmit the measurement report to the base station when the following conditions are satisfied:

If the current cellsTriggeredList is different from the one triggered in the latest MR and prohibit timer is not running, UE reports MR if triggering entry condition remains fulfilled.

An embodiment of the disclosure may be applied together with an above-described embodiment (e.g., any one of FIGS. 1E to 1G).

FIG. 1I is a flow diagram illustrating a process in which a UAV UE efficiently transmits a measurement report to a base station in a mobile communication system, according to an embodiment.

Referring to FIG. 1I, a UAV UE 1i-01 may be in an RRC connected mode (RRC_CONNECTED) by establishing an RRC connection with an NR base station 1i-02.

In operation 1i-10, the UE may transmit a UE capability information message (UECapabilityInformation) to the base station. A method of transmitting the UE capability information message (LTECapabilityInformation) may follow an above-described embodiment (e.g., any one of FIGS. 1E to 1H). Additionally, the following parameter may be stored in the message.

Whether a prohibit timer is supported or not: indicates that the UE is capable of performing a measurement report initiation procedure only when the prohibit timer is not running when the following 4> condition is satisfied. Alternatively, whether a prohibit timer is supported or not indicates that the UE is capable of performing a measurement report initiation procedure only when the cell list included in the current cellTriggeredList is different from the cell list included in the cellTriggeredList for which a measurement report is most recently triggered (e.g., for the same event) and the prohibit timer is not running, even if the condition 4> below is satisfied. However, under a specific condition (e.g., when a specific event condition is satisfied or when the number of cells simultaneously satisfying a specific event condition is larger than or equal to a predetermined threshold value), the UE may transmit a measurement report even if the prohibit timer is running (for example, under a specific condition, transmission of the measurement report may be triggered regardless of whether the prohibit timer is running. Alternatively, under a specific condition, the UE may consider (identify or determine) that the prohibit timer is not running. In case that the UE supports the prohibit timer, the UE may operate according to any one of the operations described above in the following stages. However, the operation of the UE is not limited to the above-described operation methods, and may further include an additional operation considering the prohibit timer.

    2> if the *reportType* is set to *eventTriggered* and if the corresponding *reportConfig* includes *numberOfTriggeringCells,* and if the entry condition applicable for this event, i.e., the event corresponding with the *eventId* of the corresponding *reportConfig* within *VarMeasConfig,* is fulfilled for one or more applicable cells for all measurements after layer 3 filtering taken during *timeToTrigger* defined for this event within the *VarMeasConfig*:

    3> If the *VarMeasReportList* does not include a measurement reporting entry for this *measId* (a first cell triggers the event):

    4> include a measurement reporting entry within the *VarMeasReportList* for this *measId*;

    3> If the number of cell(s) in the *cellsTriggeredList* is larger than or equal to *numberOfTriggeringCells:*

    4> include the concerned cell(s) in the *cellsTriggeredList* defined within the *VarMeasReportList* for this *measId*;

    3> else:

    4> include the concerned cell(s) in the *cellsTriggeredList* defined within the *VarMeasReportList* for this *measId*;

4> If the number of cell(s) in the cellsTriggeredList is larger than or equal to numberOfTriggeringCells:
5> set the *numberOfReportsSent* defined within the *VarMeasReportList* for this *measId* to 0;
5> initiate the measurement reporting procedure, as specified in 5.5.5;

In operation 1i-15, the base station may transmit a predetermined RRC message (e.g., RRCResume or RRCReconfiguration) including measurement configuration information (MeasConfig) to the LTE. A method of transmitting the predetermined RRC message (e.g., RRCResume or RRCReconfiguration) may follow an above-described embodiment (e.g., any one of FIGS. 1E to 1H). For convenience of explanation, the base station may configure numberOfTriggeringCells to be 3, and may configure eventTriggered to be EventA3 (e.g., one of EventA4, EventA5, EventB1, and EventB2, or may be configured as another event to which numberOfTriggeringCells is applied). Herein, a value of the prohibit timer described in operation 1i-10 may be included in the measurement configuration information. The prohibit timer value may be configured to be a value less than or equal to reportInterval. Alternatively, the prohibit timer value may be configured to be a value scaled to reportInterval or configured to be a value of x to be scaled (e.g., 0.2). In case that a value to be scaled is configured, the UE may configure the prohibit timer value to be x *reportInterval. In case that the prohibit timer value is not configured, the UE may operate as in an above-described embodiment (e.g., any one of FIGS. 1E to 1H), or may decide (identify or check) that the prohibit timer value is configured as a default value. Alternatively, transmission of the measurement report may be triggered under a specific condition (e.g., when a specific event condition is satisfied or when the number of cells simultaneously satisfying a specific event condition is larger than or equal to a predetermined threshold value) regardless of whether the prohibit timer is running. Alternatively, under a specific condition, the UE may consider (identify or determine) that the prohibit timer is not running.

In operation 1i-20, the UE may decide (identify or check) whether a measurement report should be triggered, based on the measurement configuration information received in operation 1h-15. Specifically, the UE may decide (identify, or check) whether the following conditions are satisfied:

2> if the *reportType* is set to *eventTriggered* and if the corresponding *reportConfig* includes *numberOfTriggeringCells*, and if the entry condition applicable for this event, i.e., the event corresponding with the *eventId* of the corresponding *reportConfig* within *VarMeasConfig*, is fulfilled for one or more applicable cells for all measurements after layer 3 filtering taken during *timeToTrigger* defined for this event within the *VarMeasConfig*:
3> If the *VarMeasReportList* does not include a measurement reporting entry for this *measId* (a first cell triggers the event):
4> include a measurement reporting entry within the *VarMeasReportList* for this *measId*;
3> If the number of cell(s) in the *cellsTriggeredList* is larger than or equal to *numberOfTriggeringCells*:
4> include the concerned cell(s) in the *cellsTriggeredList* defined within the *VarMeasReportList* for this *measId*;
3> else:
4> include the concerned cell(s) in the *cellsTriggeredList* defined within the *VarMeasReportList* for this *measId*;
4> If the number of cell(s) in the *cellsTriggeredList* is larger than or equal to *numberOfTriggeringCells*:
5> set the *numberOfReportsSent* defined within the *VarMeasReportList* for this *measId* to 0;
5> initiate the measurement reporting procedure, as specified in 5.5.5;

When the entry condition for EventA3 for cell 1, cell 2, and/or cell 3 are satisfied, the UE may include cell 1, cell 2, and/or cell 3 in the cellTriggeredCellList. When the number of cells included in cellTriggeredCellList is larger than or equal to numberOfTriggeringCells, the UE may initiate a measurement reporting procedure according to an above-described embodiment (e.g., any one of FIGS. 1E to 1H). The UE may run the prohibit timer.

In operation 1i-25, the UE may transmit a measurement report to the base station according to an above-described embodiment (e.g., any one of FIGS. 1E to 1H).

In operation 1i-30, the LTE may decide (identify or check) whether a measurement report should be triggered, based on the measurement configuration information received in operation 1i-15. That is, the LTE may include cell 1, cell 2, cell 3, and/or cell 4 in the cellTriggeredCellList when the entry condition for EventA3 for cell 1, cell 2, cell 3, and/or cell 4 are satisfied. In the disclosure, when the prohibit timer is running, the LTE may not transmit the measurement report to the base station. However, under a specific condition (e.g., when a specific event condition is satisfied or when the number of cells simultaneously satisfying a specific event condition is larger than or equal to a predetermined threshold value), the LTE may transmit a measurement report even if the prohibit timer is running. For example, under specific conditions, transmission of the measurement report may be triggered regardless of whether the prohibit timer is running. Alternatively, under a specific condition, the UE may consider (identify or determine) that the prohibit timer is not running and transmit a measurement report to the base station.

In operation 1i-35, the LTE may decide (identify or check) whether a measurement report should be triggered, based on the measurement configuration information received in operation 1i-15. That is, the LTE may include cell 1, cell 2, cell 3, and/or cell 4 in the cellTriggeredCellList when the entry condition for EventA3 for cell 1, cell 2, cell 3, and/or cell 4 are satisfied. If the prohibit timer is not running, a measurement report start procedure may be performed. That is, in case that, while the prohibit timer is not running, the cellTriggeredList for which the measurement report start procedure is previously triggered is different from the current cellTriggeredList, and the entry condition for EventA3 is satisfied, the LTE may trigger the measurement report initiation procedure. The LTE may run the prohibit timer.

In operation 1i-40, the LTE may transmit a measurement report to the base station.

In operation 1i-45, the LTE may decide (identify or check) whether the measurement report should be triggered, based on the measurement configuration information received in operation 1i-15. That is, the LTE may include cell 1, cell 2, and/or cell 3 in the cellTriggeredCellList when the entry condition for EventA3 for cell 1, cell 2, and/or cell 3 are satisfied. That is, cell4 may be excluded from the cellTriggeredCellList. At this time, the LTE may trigger the measurement report even if the prohibit timer is running.

In operation 1i-50, the LTE may transmit a measurement report to the base station.

In the disclosure, when the entry condition for an event including numberOfTriggeringCells are satisfied, the LTE may initiate a measurement reporting procedure and transmit a measurement report to the base station when the following conditions are satisfied:

If the current cellsTriggeredList are superset of the one triggered in the latest MR and prohibit timer is not running, LTE reports MR if triggering entry condition remains fulfilled. If the previous cellsTriggeredList in the latest MR is not subset of the current cellsTriggeredList, LTE reports MR regardless of whether prohibit timer is running or not.

An embodiment of the disclosure may be applied together with an above-described embodiment (e.g., any one of FIGS. 1E to 1H).

FIG. 1J is a flow diagram illustrating a process in which a UAV UE efficiently transmits a measurement report to a base station in a mobile communication system, according to an embodiment.

Referring to FIG. 1J, a UAV LTE 1j-01 may be in an RRC connected mode (RRC_CONNECTED) by establishing an RRC connection with an NR base station 1j-02.

In operation 1j-10, the LTE may transmit a LTE capability information message (UECapabilityInformation) to the base station. A method of transmitting a LTE capability information message (UECapabilityInformation) may follow an above-described embodiment. Additionally, the following parameter may be stored in the message.

reportOnLeavenumberOfTriggeringCells: indicates whether, in case of an event to which numberOfTriggering-Cells is applied, the UE is capable of initiating a measurement report when the following leaving conditions are satisfied only in case that the LTE initiates the measurement report to the base station according to satisfaction of the entry condition.

2> if the *reportType* is set to *eventTriggered* and if the leaving condition applicable for this event is fulfilled for one or more of the cells included in the *cellsTriggeredList* defined within the *VarMeasReportList* for this *measId* for all measurements after layer 3 filtering taken during *timeToTrigger* defined within the *VarMeasConfig* for this event:
3> remove the concerned cell(s) in the *cellsTriggeredList* defined within the *VarMeasReportList* for this *measId*;

In operation 1j-15, the base station may transmit a predetermined RRC message (e.g., RRCResume or RRCReconfiguration) including measurement configuration information (MeasConfig) to the LTE. A method of transmitting the predetermined RRC message (e.g., RRCResume or RRCReconfiguration) may follow an above-described embodiment (e.g., any one of FIGS. 1E to 1I). For convenience of explanation, the base station may configure numberOfTriggeringCells to be 3, and may configure eventTriggered to be EventA3 (e.g., one of EventA4, EventA5, EventB1, and EventB2, or may be configured as another event to which numberOfTriggeringCells is applied). Herein, reportOnLeaveNumberOfTriggeringCells may be included in the measurement configuration information.

In operation 1j-20, the UE may decide (identify or check) whether a measurement report should be triggered, based on the measurement configuration information received in operation 1j-15. Specifically, the LTE may decide (identify, or check) whether the following conditions are satisfied:

2> if the *reportType* is set to *eventTriggered* and if the corresponding *reportConfig* includes *numberOfTriggeringCells,* and if the entry condition applicable for this event, i.e., the event corresponding with the *eventId* of the corresponding *reportConfig* within *VarMeasConfig,* is fulfilled for one or more applicable cells for all measurements after layer 3 filtering taken during *timeToTrigger* defined for this event within the *VarMeasConfig*:
3> If the *VarMeasReportList* does not include a measurement reporting entry for this *measId* (a first cell triggers the event):
4> include a measurement reporting entry within the *VarMeasReportList* for this *measId*;
3> If the number of cell(s) in the *cellsTriggeredList* is larger than or equal to *numberOfTriggeringCells:*
4> include the concerned cell(s) in the *cellsTriggeredList* defined within the *VarMeasReportList* for this *measId*;
3> else:
4> include the concerned cell(s) in the *cellsTriggeredList* defined within the *VarMeasReportList* for this *measId*;

4> If the number of cell(s) in the *cellsTriggeredList* is larger than or equal to *numberOfTriggeringCells:*
5> set the *numberOfReportsSent* defined within the *VarMeasReportList* for this *measId* to 0;
5> initiate the measurement reporting procedure, as specified in 5.5.5;

The UE may include cell 1 and/or cell 2 in cellTriggeredCellList when cell 1 and/or cell 2 satisfy the entry condition for EventA3. When the number of cells included in the cellTriggeredCellList is smaller than the numberOfTriggeringCells, the LTE may not initiate the measurement reporting procedure according to an above-described embodiment (e.g., any one of FIGS. 1E to 1I).

In operation 1j-25, the LTE may decide (identify or check) whether a measurement report should be triggered, based on the measurement configuration information received in operation 1j-15. Specifically, the LTE may decide (identify, or check) whether the following conditions are satisfied:

2> if the *reportType* is set to *eventTriggered* and if the leaving condition applicable for this event is fulfilled for one or more of the cells included in the *cellsTriggeredList* defined within the *VarMeasReportList* for this *measId* for all measurements after layer 3 filtering taken during *timeToTrigger* defined within the *VarMeasConfig* for this event:
3> remove the concerned cell(s) in the *cellsTriggeredList* defined within the *VarMeasReportList* for this *measId*;
3> if *reportOnLeavenumberOfTriggeringCells* is set to *true* for the corresponding reporting configuration and if the measurement reporting procedure was initiated due to the entry condition:
4> initiate the measurement reporting procedure, as specified in 5.5.5;

That is, in operation 1j-20, the LTE did not initiate the measurement reporting procedure because the cell list included in the cellTriggeredList is less than numberOfTriggeringCells according to satisfaction of the entry condition, the LTE may not initiate the measurement reporting procedure even if the leaving condition is satisfied. Therefore, the LTE may reduce the overhead of transmitting a measurement report to the base station. In other words, instead of always initiating a measurement reporting procedure when the leaving condition is satisfied for an event to which numberOfTriggeringCells is applied, the LTE may refrain from initiating the measurement reporting procedure when the leaving condition is satisfied only in case that the LTE has initiated the measurement reporting procedure according to the satisfaction of the entry condition.

In operation 1j-30, the LTE may decide (identify or check) whether a measurement report should be triggered, based on the measurement configuration information received in operation 1j-15. Specifically, the LTE may decide (identify, or check) whether the following conditions are satisfied:

2> if the *reportType* is set to *eventTriggered* and if the corresponding *reportConfig* includes *numberOfTriggeringCells,* and if the entry condition applicable for this event, i.e., the event corresponding with the *eventId* of the corresponding *reportConfig* within *VarMeasConfig,* is fulfilled for one or more applicable cells for all measurements after layer 3 filtering taken during *timeToTrigger* defined for this event within the *VarMeasConfig*:
3> If the *VarMeasReportList* does not include a measurement reporting entry for this *measId* (a first cell triggers the event):
4> include a measurement reporting entry within the *VarMeasReportList* for this *measId*;
3> If the number of cell(s) in the *cellsTriggeredList* is larger than or equal to *numberOfTriggeringCells:*
4> include the concerned cell(s) in the *cellsTriggeredList* defined within the *VarMeasReportList* for this *measId*;
3> else:
4> include the concerned cell(s) in the *cellsTriggeredList* defined within the *VarMeasReportList* for this *measId*;
4> If the number of cell(s) in the *cellsTriggeredList* is larger than or equal to *numberOfTriggeringCells:*
5> set the *numberOfReportsSent* defined within the *VarMeasReportList* for this *measId* to 0;
5> initiate the measurement reporting procedure, as specified in 5.5.5;

The UE may include cell 1, cell 2, and/or cell 3 in cellTriggeredCellList when cell 1, cell 2, and/or cell 3 satisfy the entry condition for EventA3. When the number of cells included in cellTriggeredCellList is larger than or equal to numberOfTriggeringCells, the LTE may initiate a measurement reporting procedure according to an above-described embodiment (e.g., any one of FIGS. 1E to 1I).

In operation 1j-35, the LTE may transmit a measurement report to the base station according to an above-described embodiment (e.g., any one of FIGS. 1E to 1I).

In operation 1j-40, the LTE may decide (identify or check) whether a measurement report should be triggered, based on the measurement configuration information received in operation 1j-15. Specifically, the LTE may decide (identify, or check) whether the following conditions are satisfied:

2> if the *reportType* is set to *eventTriggered* and if the leaving condition applicable for this event is fulfilled for one or more of the cells included in the *cellsTriggeredList* defined within the *VarMeasReportList* for this *measId* for all measurements after layer 3 filtering taken during *timeToTrigger* defined within the *VarMeasConfig* for this event:
3> remove the concerned cell(s) in the *cellsTriggeredList* defined within the *VarMeasReportList* for this *measId*;
3> if *reportOnLeavenumberOfTriggeringCells* is set to *true* for the corresponding reporting configuration and if the measurement reporting procedure was initiated due to the entry condition:
4> initiate the measurement reporting procedure, as specified in 5.5.5;

The LTE may initiate a measurement reporting procedure when there is a cell that satisfies the leaving condition.
In operation 1j-45, the LTE may transmit a measurement report to the base station according to an above-described embodiment (e.g., any one of FIGS. 1E to 1I).
An embodiment of the disclosure may be applied together with an above-described embodiment (e.g., any one of FIGS. 1E to 1I).
FIG. 1K is a flow diagram illustrating a process in which a UAV LTE efficiently transmits a measurement report to a base station in a mobile communication system, according to an embodiment.
Referring to FIG. 1K, a UAV LTE 1k-01 may be in an RRC connected mode (RRC_CONNECTED) by establishing an RRC connection with an NR base station 1k-02.
In operation 1k-10, the LTE may transmit a LTE capability information message (UECapabilityInformation) to the base station. A method of transmitting the LTE capability information message (UECapabilityInformation) may follow an above-described embodiment (e.g., any one of FIGS. 1E to 1J). Additionally, the following parameter may be stored in the message.
A prohibition timer according to leaving conditions: indicates whether, in case of an event to which numberOfTriggeringCells is applied, the LTE is capable of initiating a measurement report when the following leaving conditions are satisfied and the prohibit timer is not running.

2> if the *reportType* is set to *eventTriggered* and if the leaving condition applicable for this event is fulfilled for one or more of the cells included in the *cellsTriggeredList* defined within the *VarMeasReportList* for this *measId* for all measurements after layer 3 filtering taken during *timeToTrigger* defined within the *VarMeasConfig* for this event:
3> remove the concerned cell(s) in the *cellsTriggeredList* defined within the *VarMeasReportList* for this *measId*;
3> if reportOnLeave is set to true for the corresponding reporting configuration

In operation 1k-15, the base station may transmit a predetermined RRC message (e.g., RRCResume or RRCReconfiguration) including measurement configuration information (MeasConfig) to the UE. A method of transmitting the predetermined RRC message (e.g., RRCResume or RRCReconfiguration) may follow an above-described embodiment (e.g., any one of FIGS. 1E to 1J). For convenience of explanation, the base station may configure numberOfTriggeringCells to be 3, and may configure eventTriggered to be EventA3 (e.g., one of EventA4, EventA5, EventB1, and EventB2, or may be configured as another event to which numberOfTriggeringCells is applied). Herein, the measurement configuration information may be configured with a prohibit timer value applied to a leaving condition of an event to which numberOfTriggeringCells is applied. The prohibit timer value may be configured to be a value less than or equal to reportInterval. Alternatively, the prohibit timer value may be configured to be a value scaled to reportInterval or configured to be a value of x to be scaled (e.g., 0.2). When a value to be scaled is configured, the LTE may configure the prohibit timer value to x *reportInterval. In case that the prohibition timer value is not configured, the LTE may operate as in an above-described embodiment (e.g., any one of FIGS. 1E to 1J), or may decide (identify or check) that the prohibition timer value is configured as a default value. Alternatively, transmission of the measurement report may be triggered under a specific condition (e.g., when a specific event condition is satisfied or when the number of cells simultaneously satisfying a specific event condition is larger than or equal to a predetermined threshold value) regardless of whether the prohibit timer is running. Alternatively, under a specific condition, the LTE may consider (identify or determine) that the prohibit timer is not running. In case that the LTE supports the prohibit timer, the LTE may operate according to any one of the operations described above in the following stages. However, the operation of the LTE is not limited to the above-described operation methods, and may further include an additional operation considering the prohibit timer.
In operation 1k-20, the LTE may decide (identify or check) whether a measurement report should be triggered, based on the measurement configuration information received in operation 1k-15. For example, the cell list included in cellTriggeredList may follow an above-described embodiment (e.g., any one of FIGS. 1E to 1J). The LTE may decide (identify or check) whether the following leaving conditions are satisfied:

2> if the *reportType* is set to *eventTriggered* and if the leaving condition applicable for this event is fulfilled for one or more of the cells included in the *cellsTriggeredList* defined within the *VarMeasReportList* for this *measId* for all measurements after layer 3 filtering taken during *timeToTrigger* defined within the *VarMeasConfig* for this event:
3> remove the concerned cell(s) in the *cellsTriggeredList* defined within the *VarMeasReportList* for this *measId*;

3> if reportOnLeave is set to true for the corresponding reporting configuration

At this time, if the prohibit timer according to the leaving condition is running, the LTE may not initiate a measurement reporting procedure. That is, when the prohibit timer is not running, the LTE may initiate the measurement reporting procedure when the condition is satisfied and transmit the measurement report to the base station 1k-25. When the LTE initiates the measurement reporting procedure, the prohibit timer may be run or re-run.

An embodiment of the disclosure may be applied together with an above-described embodiment (e.g., any one of FIGS. 1E to 1J).

FIG. 1L is a flow diagram illustrating a process in which a UAV UE efficiently transmits a measurement report to a base station in a mobile communication system, according to an embodiment.

Referring to FIG. 1I, a UAV LTE 11-01 may be in an RRC connected mode (RRC_CONNECTED) by establishing an RRC connection with an NR base station 11-02.

In operation 11-10, the LTE may transmit a LTE capability information message (UECapabilityInformation) to the base station. A method of transmitting the LTE capability information message (UECapabilityInformation) may follow an above-described embodiment (e.g., any one of FIGS. 1E to 1K). Additionally, the following parameter may be stored in the message:

numberOfTriggeringCells for leaving: indicates whether, in case of an event to which numberOfTriggeringCells is an applied, the LTE is capable of initiating a measurement report only when the number of cells satisfying the following leaving condition is larger than or equal to the numberOfTriggeringCells.

In this case, reportOnLeave may not be configured.

2> if the *reportType* is set to *eventTriggered* and if the leaving condition applicable for this event is fulfilled for one or more of the cells included in the *cellsTriggeredList* defined within the *VarMeasReportList* for this *measId* for all measurements after layer 3 filtering taken during *timeToTrigger* defined within the *VarMeasConfig* for this event:
3> remove the concerned cell(s) in the *cellsTriggeredList* defined within the *VarMeasReportList* for this *measId*;
3> if reportOnLeave is set to true for the corresponding reporting configuration

In operation 1I-15, the base station may transmit a predetermined RRC message (e.g., RRCResume or RRCReconfiguration) including measurement configuration information (MeasConfig) to the LTE. A method of transmitting the predetermined RRC message (e.g., RRCResume or RRCReconfiguration) may follow an above-described embodiment (e.g., any one of FIGS. 1E to 1K). For convenience of explanation, the base station may configure numberOfTriggeringCells to be 3, and configure eventTriggered to be EventA3 (e.g., one of EventA4, EventA5, EventB1, and EventB2, or may be configured as another event to which numberOfTriggeringCells is applied). Herein, numberOfTriggeringCells for leaving, which is applied to the leaving condition of an Event to which numberOfTriggeringCells is applied, may be configured in the measurement configuration information. That is, the LTE may trigger the measurement report only when cells satisfying the leaving condition among the cells included in the cellTriggeredList are greater than or equal to the numberOfTriggeringCells for leaving.

In operation 11-20, the LTE may decide (identify or check) whether a measurement report should be triggered, based on the measurement configuration information received in operation 1I-15. The cell list included in cellTriggeredList may follow an above-described embodiment (e.g., any one of FIGS. 1E to 1K). The LTE may decide (identify or check) whether the number of cells satisfying the following leaving condition is larger than or equal to the numberOfTriggeringCells for leaving.

2> if the *reportType* is set to *eventTriggered* and if the leaving condition applicable for this event is fulfilled for one or more of the cells included in the *cellsTriggeredList* defined within the *VarMeasReportList* for this *measId* for all measurements after layer 3 filtering taken during *timeToTrigger* defined within the *VarMeasConfig* for this event:
3> remove the concerned cell(s) in the *cellsTriggeredList* defined within the *VarMeasReportList* for this *measId*;
3> if reportOnLeave is set to true for the corresponding reporting configuration

When the number of cells satisfying the following leaving condition is larger than or equal to the numberOfTriggeringCells for leaving, the LTE may initiate a measurement reporting procedure and transmit a measurement report to the base station 11-25.

An embodiment of the disclosure may be applied together with an above-described embodiment (e.g., any one of FIGS. 1E to 1K).

FIG. 1M is a block diagram illustrating an internal structure of a terminal, according to an embodiment.

Referring to FIG. 1M, the terminal may include an RF processor 1m-10, a baseband processor 1m-20, a storage 1m-30, and/or a controller 1m-40.

The RF processor 1m-10 may perform a function for transmitting and/or receiving a signal via a wireless channel, such as band conversion and amplification of the signal. That is, the RF processor 1m-10 may up-convert a baseband signal provided from the baseband processor 1m-20 to an RF band signal and then transmits the same through an antenna, and may down-convert an RF band signal received through the antenna to a baseband signal. For example, the RF processor 1m-10 may include a transmission filter, a reception filter, an amplifier, a mixer, an oscillator, a digital-to-analog converter (DAC), an analog-to-digital converter (ADC), etc. The above-described components of the RF processor 1m-10 are only examples, and the RF processor 1m-10 may further include other components or may omit some of the above-described components. In FIG. 1M, although only one antenna is illustrated, the terminal may have multiple antennas. In addition, the RF processor 1m-10 may include a plurality of RF chains. Furthermore, the RF processor 1m-10 may perform beamforming. For the beamforming, the RF processor 1m-10 may adjust the phase and magnitude of each of signals transmitted and/or received through multiple antennas or antenna elements. In addition, the RF processor may perform MIMO, and may receive multiple layers when performing MIMO operations.

The baseband processor 1m-20 may perform a function of conversion between a baseband signal and a bit stream according to the physical layer standard of a system. For example, during data transmission, the baseband processor 1m-20 may generate complex symbols by encoding and modulating a transmission bit stream. In addition, upon receiving data, the baseband processor 1m-20 may restore the received bit stream through demodulation and decoding of the baseband signal provided from the RF processor 1m-10. For example, in the case of conforming to an OFDM method, when transmitting data, the baseband processor 1m-20 may encode and modulate a transmission bit stream to generate complex symbols, map the complex symbols to subcarriers, and then configure OFDM symbols via an inverse fast Fourier transform (IFFT) operation and cyclic prefix (CP) insertion. In addition, when receiving data, the baseband processor 1m-20 may divide the baseband signal provided from the RF processor 1m-10 into units of OFDM symbols, restore signals mapped to subcarriers via the fast Fourier transform (FFT) operation, and then restore a received bit stream via demodulation and decoding.

The baseband processor 1m-20 and the RF processor 1m-10 may transmit and/or receive signals as described above. Accordingly, each of the baseband processor 1m-20 and the RF processor 1m-10 may be referred to as a transmitter, a receiver, a transceiver, or a communicator. Furthermore, at least one of the baseband processor 1m-20 and the RF processor 1m-10 may include a plurality of communication modules to support a plurality of different radio access technologies. In addition, at least one of the baseband processor 1m-20 and the RF processor 1m-10 may include different communication modules to process signals in different frequency bands. For example, the different radio access technologies may include a wireless local area network (LAN) (e.g., IEEE 802.11), a cellular network (e.g., LTE), and the like. In addition, the different frequency bands may include a super-high-frequency (SHF) (e.g., 2.NRhz, NRhz) band and a millimeter-wave (e.g., 60 GHz) band. The terminal may transmit and/or receive a signal to/from the base station by using the baseband processor 1m-20 and the RF processor 1m-10, and the signal may include control information and data.

The storage 1m-30 may store data such as a basic program, an application, or configuration information for the operation of the LTE. In particular, the storage 1m-30 may store information related to a second access node, which performs wireless communication using the second wireless access technology. In addition, the storage 1m-30 may provide stored data in response to a request from the controller 1m-40. The storage 1m-30 may be configured by a storage medium, such as a ROM, a RAM, a hard disk, a CD-ROM, and a DVD, or a combination of storage media. In addition, the storage 1m-30 may include multiple memories.

The controller 1m-40 may control the overall operation of the LTE. For example, the controller 1m-40 may transmit and/or receive signals through the baseband processor 1m-20 and the RF processor 1m-10. In addition, the controller 1m-40 records and reads data in and from the storage 1m-30. To this end, the controller 1m-40 may include at least one processor. For example, the controller 1m-40 may include a communication processor that performs control for communication and an application processor (AP) that controls a higher layer such as an application. In addition, the controller 1m-40 may include a multi-connection processor 1m-42 configured to handle a process operating in multiple connection mode. In addition, at least one component of the terminal may be implemented as one chip.

FIG. 1N is a block diagram illustrating a configuration of an NR base station, according to an embodiment.

As illustrated, the base station may include an RF processor 1n-10, a baseband processor 1n-20, a backhaul communicator 1n-30, a storage 1n-40, and/or a controller 1n-50. Components included in the base station are not limited to the above-described components, and the base station may omit some of the components shown in FIG. 1N or may include additional components.

The RF processor 1n-10 may perform a function for transmitting and/or receiving a signal via a wireless channel, such as band conversion and amplification of the signal. That is, the RF processor 1n-10 may up-convert a baseband signal provided from the baseband processor 1n-20 to an RF band signal and then transmit the same through an antenna, and down-convert an RF band signal received through the antenna to a baseband signal. For example, the RF processor 1n-10 may include a transmission filter, a reception filter, an amplifier, a mixer, an oscillator, a DAC, and/or an analog-to-digital converter (ADC), etc. In FIG. 1N, although only one antenna is illustrated, a first connection node or base station may have multiple antennas. In addition, the RF processor 1n-10 may include a plurality of RF chains. Furthermore, the RF processor 1n-10 may perform beamforming. For the beamforming, the RF processor 1n-10 may adjust the phase and magnitude of each of signals transmitted and/or received through multiple antennas or antenna elements. The RF processor may perform down-MIMO operations by transmitting one or more layers.

The baseband processor 1n-20 may perform a function of conversion between a baseband signal and a bit stream according to the physical layer standard of a first radio access technology. For example, during data transmission, the baseband processor 1n-20 may generate complex symbols by encoding and modulating a transmission bit stream. In addition, upon receiving data, the baseband processor 1n-20 may restore the received bit stream through demodulation and decoding of the baseband signal provided from the RF processor 1n-10. For example, in a case of conforming to the OFDM method, when transmitting data, the baseband processor 1n-20 may encode and modulate a transmission bit stream to generate complex symbols, map the complex symbols to subcarriers, and then configure OFDM symbols via an IFFT operation and CP insertion. In addition, when receiving data, the baseband processor 1n-20 may divide the baseband signal provided from the RF processor 1n-10 into units of OFDM symbols, restore signals mapped to subcarriers via the FFT operation, and then restore a received bit stream via demodulation and decoding. The baseband processor 1n-20 and the RF processor 1n-10 transmit and/or receive signals as described above. Accordingly, each of the baseband processor 1n-20 and the RF processor 1n-10 may be referred to as a transmitter, a receiver, a transceiver, or a wireless communicator. The base station may transmit and/or receive a signal to/from a terminal by using the baseband processor 1m-20 and the RF processor 1m-10, and the signal may include control information and data.

The backhaul communicator 1n-30 may provide an interface for performing communication with other nodes in a network. That is, the backhaul communicator 1n-30 may convert a bit stream transmitted from a main base station to another node, for example, an auxiliary base station or a core network, into a physical signal, and convert the physical signal received from the other node into a bit stream. The backhaul communicator 1n-30 may be included in the communicator.

The storage 1n-40 may store data such as a basic program, an application, and configuration information for the operation of the main base station. In particular, the storage 1n-40 may store information on bearers allocated to the connected terminal, measurement results reported from the connected terminal, and the like. In addition, the storage 1n-40 may store information serving as a criterion for determining whether to provide or stop multiple connections to the terminal. In addition, the storage 1n-40 may provide stored data in response to a request from the controller 1n-50. The storage 1m-30 may be configured by a storage medium, such as a ROM, a RAM, a hard disk, a CD-ROM, and a DVD, or a combination of storage media. In addition, the storage 1m-30 may include multiple memories.

The controller 1n-50 may control the overall operation of the main base station. For example, the controller 1n-50 may transmit and/or receive signals through the baseband processor 1n-20 and the RF processor 1n-10 or through the backhaul communicator 1n-30. In addition, the controller 1n-50 records and reads data in and from the storage 1n-40. To this end, the controller 1n-50 may include at least one processor. In addition, the controller 1n-50 may include a multi-connection processor 1n-52 configured to handle a process operating in multiple connection mode. In addition, at least one component of the base station may be implemented as one chip.

The methods according to the embodiments described in the claims or the specification of the disclosure may be implemented in software, hardware, or a combination of hardware and software.

As for the software, a computer-readable storage medium storing one or more programs (software modules) may be provided. One or more programs stored in the computer-readable storage medium may be configured for execution by one or more processors of an electronic device. One or more programs may include instructions for controlling an electronic device to execute the methods according to the embodiments described in the claims or the specification of the disclosure.

Such a program (software module, software) may be stored to a random access memory, a non-volatile memory including a flash memory, a read only memory (ROM), an electrically erasable programmable ROM (EEPROM), a magnetic disc storage device, a compact disc (CD)-ROM, a digital versatile disc (DVD) or other optical storage device, and a magnetic cassette. Alternatively, it may be stored to a memory combining part or all of those recording media. A plurality of memories may be included.

Also, the program may be stored in an attachable storage device accessible via a communication network such as internet, intranet, LAN, wide LAN (WLAN), or storage area network (SAN), or a communication network by combining these networks. Such a storage device may access a device which executes an embodiment of the disclosure through an external port. In addition, a separate storage device on the communication network may access the device which executes an embodiment.

Components included in the disclosure are expressed in a singular or plural form. However, the singular or plural expression is appropriately selected according to a proposed situation for the convenience of explanation, the disclosure is not limited to a single component or a plurality of components, the components expressed in the plural form may be configured as a single component, and the components expressed in the singular form may be configured as a plurality of components.

While embodiments have been described herein, various changes may be made therein without departing from the scope of the disclosure. Therefore, the scope of the disclosure is not limited and defined by the described embodiment and is defined not only the scope of the claims as below but also their equivalents.

The embodiments described and shown herein are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Furthermore, the above respective embodiments may be employed in combination, as necessary. For example, a part of one embodiment of the disclosure may be combined with a part of another embodiment to operate a base station and a terminal. As an example, a part of a first embodiment may be combined with a part of a second embodiment to operate a base station and a terminal. Furthermore, variants based on the technical idea of the above embodiments may be implemented in systems such as frequency division duplexing (FDD) LTE, time division duplexing (TDD) LTE, 5G, or NR systems.

In the drawings in which methods of the disclosure are described, the order of the description does not always correspond to the order in which steps of each method are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

Furthermore, in methods of the disclosure, some or all of the contents of each embodiment may be implemented in combination without departing from the essential spirit and scope of the disclosure.

Various embodiments of the disclosure have been described above. The above description of the disclosure is merely for the sake of illustration, and embodiments of the disclosure are not limited to the embodiments set forth herein. Those skilled in the art will appreciate that the disclosure may be easily modified and changed into other specific forms without departing from the technical idea or essential features of the disclosure. Therefore, the scope of the disclosure should be determined not by the above detailed description but by the appended claims, and all modification sand changes derived from the meaning and scope of the claims and equivalents thereof shall be construed as falling within the scope of the disclosure.

**Claims**

1. A method performed by a user equipment (LTE) in a wireless communication system, the method comprising:

   receiving, from a base station, configuration information on a measurement report including information on a number of triggering cells;
   transmitting, to the base station, a first measurement report for at least one first cell fulfilling an entry condition, in case that a number of the at least one first cell is larger than or equal to the number of triggering cells; and
   transmitting, to the base station, a second measurement report for at least one second cell fulfilling a leaving condition, wherein the at least one second cell fulfilling the leaving condition is a cell which was included in the first measurement report.

2. The method of claim 1,
   wherein a third cell fulfilling the leaving condition is excluded from the second measurement report, in case that the third cell was not included in the first measurement report.

3. The method of claim 1,
   wherein the LTE is an unmanned aerial vehicle (UAV) LTE.

4. The method of claim 1, further comprising:
   transmitting, to the base station, capability information including information indicating that the UE supports the number of triggering cells.

5. A method performed by a base station in a wireless communication system, the method comprising:

   transmitting, to a user equipment (LTE), configuration information on a measurement report including information on a number of triggering cells;
   receiving, from the LTE, a first measurement report for at least one first cell fulfilling an entry condition, in case that a number of the at least one first cell is larger than or equal to the number of triggering cells; and
   receiving, from the LTE, a second measurement report for at least one second cell fulfilling a leaving condition, wherein at least one second cell fulfilling the leaving condition is a cell which was included in the first measurement report.

6. The method of claim 5,
wherein a third cell fulfilling the leaving condition is excluded from the second measurement report, in case that the third cell was not included in the first measurement report.

7. The method of claim 5,
wherein the LTE is an unmanned aerial vehicle (UAV) LTE.

8. The method of claim 5, further comprising:
receiving, from the LTE, a capability information including information indicating that the LTE supports the number of triggering cells.

9. A user equipment (LTE) in a wireless communication system, the LTE comprising:

a transceiver; and
at least one processor coupled with the transceiver and configured to:

receive, from a base station, configuration information on a measurement report including information on a number of triggering cells,
transmit, to the base station, a first measurement report for at least one first cell fulfilling an entry condition, in case that a number of the at least one first cell is larger than or equal to the number of triggering cells,
transmit, to the base station, a second measurement report for at least one second cell fulfilling a leaving condition, wherein the at least one second cell fulfilling the leaving condition is a cell which was included in the first measurement report.

10. The LTE of claim 9,
wherein a third cell fulfilling the leaving condition is excluded from the second measurement report, in case that the third cell was not included in the first measurement report.

11. The LTE of claim 9,
wherein the LTE is an unmanned aerial vehicle (UAV) LTE.

12. The LTE of claim 9, wherein the at least one processor is further configured to:
transmit, to the base station, capability information including information indicating that the LTE supports the number of triggering cells.

13. A base station in a wireless communication system, the base station comprising:

a transceiver; and
at least one processor coupled with the transceiver and configured to:

transmit, to a user equipment (LTE), configuration information on a measurement report including information on a number of triggering cells,
receive, from the LTE, a first measurement report for at least one first cell fulfilling an entry condition, in case that a number of the at least one first cell is larger than or equal to the number of triggering cells,
receive, from the LTE, a second measurement report for at least one second cell fulfilling a leaving condition, wherein at least one second cell fulfilling the leaving condition is a cell which was included in the first measurement report.

14. The base station of claim 13,
wherein a third cell fulfilling the leaving condition is excluded from the second measurement report, in case that the third cell was not included in the first measurement report.

15. The base station of claim 13,
wherein the LTE is an unmanned aerial vehicle (UAV) LTE.

FIG.1A

FIG.1B

FIG.1C

FIG.1D

1e-01

UAV UE

1e-02

gNB

1e-05

RRC_CONNECTED

UECapabilityInformation
(multipleCellsMeasExtension)

1e-10

MeasConfig
(reportType = eventTriggered,
reportConfig includes numberOfTriggeringCells)

1e-15

1e-20

Determine whether to trigger
measurement report

MeasurementReport

1e-25

FIG.1E

1f-01 UAV UE
1f-02 gNB

1f-05 RRC_CONNECTED

1f-10 UECapabilityInformation
(multipleCellsMeasExtension)

1f-15 MeasConfig
(reportType = eventTriggered,
reportConfig includes numberOfTriggeringCells)

1f-20 Determine whether to trigger
measurement report

1f-25 MeasurementReport

1f-30 Determine whether to trigger
measurement report

1f-35 Determine whether to trigger
measurement report

1f-40 HO command (cell 1)

1f-45 RRC connection re-establishment procedure

FIG.1F

FIG.1G

FIG.1H

FIG.1I

FIG.1J

1k-01
**UAV UE**

1k-02
**gNB**

1k-05
RRC_CONNECTED

1k-10
UECapabilityInformation
(prohibit timer for leaving condition)

1k-15
MeasConfig
(reportType = eventTriggered,
reportConfig includes numberOfTriggeringCells and prohibit
timer for leaving condition)

1k-20
Determine whether to trigger
measurement report

1k-25
MeasurementReport

# FIG.1K

FIG.1L

FIG.1M

FIG.1N

| | Europäisches Patentamt<br>European Patent Office<br>Office européen des brevets | **EUROPEAN SEARCH REPORT** | Application Number<br><br>**EP 23 20 0108** |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | HUAWEI ET AL: "Potential issues and enhancements for UAV measurements", 3GPP DRAFT; R2-2210504, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE<br>,<br>vol. RAN WG2, no. Online; 20221010 – 20221019<br>30 September 2022 (2022-09-30), XP052263818,<br>Retrieved from the Internet:<br>URL:https://ftp.3gpp.org/tsg_ran/WG2_RL2/TSGR2_119bis-e/Docs/R2-2210504.zip<br>R2-2210504 Potential issues and enhancements for UAV measurements.docx<br>[retrieved on 2022-09-30]<br>* PROPOSAL 10 *<br>-----<br>-/-- | 1-15 | INV.<br>H04B7/185<br>H04W24/10 |

**TECHNICAL FIELDS SEARCHED (IPC)**

H04B
H04W

The present search report has been drawn up for all claims

| Place of search | Date of completion of the search | Examiner |
|---|---|---|
| The Hague | 16 February 2024 | Dejonghe, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 23 20 0108

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LENOVO ET AL: "measurement enhancement for NR UAV", 3GPP DRAFT; R2-2207715, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. electronic; 20220817 - 20220826 10 August 2022 (2022-08-10), XP052261034, Retrieved from the Internet: URL:https://ftp.3gpp.org/tsg_ran/WG2_RL2/T SGR2_119-e/Docs/R2-2207715.zip R2-2207715 UAV measurement.doc [retrieved on 2022-08-10] | 1,3,5,7, 9,11,13, 15 | |
| Y | * paragraph [0005] * | 4,8,12 | |
| A | | 2,6,10, 14 | |
| | ----- | | |
| X | LG ELECTRONICS INC: "Measurement report enhancement", 3GPP DRAFT; R2-2208335, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Online; 20220817 - 20220826 10 August 2022 (2022-08-10), XP052261645, Retrieved from the Internet: URL:https://ftp.3gpp.org/tsg_ran/WG2_RL2/T SGR2_119-e/Docs/R2-2208335.zip R2-2208335 Measurement Report Enhancement.docx [retrieved on 2022-08-10] * paragraph [01.2] * * paragraph [02.2] * | 1,3,5,7, 9,11,13, 15 | **TECHNICAL FIELDS SEARCHED (IPC)** |
| | ----- | | |
| | -/-- | | |

The present search report has been drawn up for all claims

| Place of search | Date of completion of the search | Examiner |
|---|---|---|
| The Hague | 16 February 2024 | Dejonghe, Olivier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.................................................................
& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 23 20 0108

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NOKIA ET AL: "On measurement reporting enhancements for UAVs — LTE baseline in NR framework", 3GPP DRAFT; R2-2207329, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Electronic; 20220817 – 20220826 10 August 2022 (2022-08-10), XP052260651, Retrieved from the Internet: URL:https://ftp.3gpp.org/tsg_ran/WG2_RL2/TSGR2_119-e/Docs/R2-2207329.zip R2-2207329 On measurement reporting enhancements for UAVs — LTE baseline in NR framework.docx [retrieved on 2022-08-10] * paragraph [02.4] * ----- | 1,3,5,7, 9,11,13, 15 | |
| Y | US 2020/023999 A1 (CHAE BEOMSEOK [KR] ET AL) 23 January 2020 (2020-01-23) * paragraphs [0308] – [0309] * ----- | 4,8,12 | TECHNICAL FIELDS SEARCHED (IPC) |

The present search report has been drawn up for all claims

| Place of search | Date of completion of the search | Examiner |
|---|---|---|
| The Hague | 16 February 2024 | Dejonghe, Olivier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 ..............................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 20 0108

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2024

| Patent document cited in search report | Publication date | Patent family member(s) | | Publication date |
|---|---|---|---|---|
| US 2020023999 A1 | 23-01-2020 | KR | 20190109331 A | 25-09-2019 |
| | | US | 2020023999 A1 | 23-01-2020 |

EPO FORM P0459

For more details about this annex : see Official Journal of the European Patent Office, No. 12/82

**EP 4 346 121 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220123656